(19) Europäisches Patentamt
European Patent Office
Office européen des brevets

(11) Numéro de publication: **0 287 477 B1**

# (12) FASCICULE DE BREVET EUROPEEN

(45) Date de publication de fascicule du brevet: **02.11.94**

(51) Int. Cl.[5]: **C08B 37/10**, A61K 31/725

(21) Numéro de dépôt: **88400928.3**

(22) Date de dépôt: **15.04.88**

Le dossier contient des informations techniques présentées postérieurement au dépôt de la demande et ne figurant pas dans le présent fascicule.

## (54) Héparines de bas poids moléculaire à structure régulière leur préparation et leurs applications biologiques.

(30) Priorité: **16.04.87 FR 8705457**

(43) Date de publication de la demande: **19.10.88 Bulletin 88/42**

(45) Mention de la délivrance du brevet: **02.11.94 Bulletin 94/44**

(84) Etats contractants désignés: **AT BE CH DE ES FR GB GR IT LI LU NL SE**

(56) Documents cités:
**EP-A- 0 208 623**
**BE-A- 620 906**

**ARZNEIM.-FORSCH./DRUG RES., vol. 36 (I), no. 4, 1986, pages 637-642; B. CASU etal.: "Retention of antilipemic activity by periodate-oxidized non-anticoagulant heparins"**

**CARBOHYDRATE RESEARCH, vol. 80, 1980, pages 131-145, Elsevier Scientific Publishing Co., Amsterdam, NL; L.-A. FRANSSON et al.: "Periodate oxidation andalkaline degradation of heparin-related glycans"**

(73) Titulaire: **SANOFI**
**32-34, rue Marbeuf**
**F-75008 Paris (FR)**

(72) Inventeur: **Lormeau, Jean-Claude**
**34 rue du 8 mai**
**F-76150 Maromme (FR)**
Inventeur: **Petitou, Maurice**
**Tour Mexico**
**65 rue du Javelot**
**F-75645 Paris Cedex 13 (FR)**
Inventeur: **Choay, Jean**
**21 rue St-Guillaume**
**F-75007 Paris (FR)**

(74) Mandataire: **Polus, Camille et al**
**c/o Cabinet Lavoix**
**2, Place d'Estienne d'Orves**
**F-75441 Paris Cedex 09 (FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).



Rank Xerox (UK) Business Services
(3.10/3.09/3.3.3)

## Description

L'invention a pour objet des héparines de bas poids moléculaire à structure régulière, leur procédé de préparation et leurs applications biologiques.

Elle vise plus spécialement des héparines de bas poids moléculaire présentant une activité dans le domaine de la régulation de certains systèmes physiologiques tout en étant pratiquement totalement dépourvues de l'activité anticoagulante s'exerçant via l'antithrombine III (ATIII).

Il est connu que l'héparine possède une activité anticoagulante s'exerçant principalement via l'antithrombine III (ATIII).

Les travaux effectués sur les relations structure/activité de l'héparine ont montré que ce type d'activité anticoagulante se trouve tout particulièrement correlée aux régions dites irrégulières de l'héparine, plus spécialement la région correspondant au pentasaccharide de structure DEFGH, décrit dans la demande FR 2.535.324, de formule :

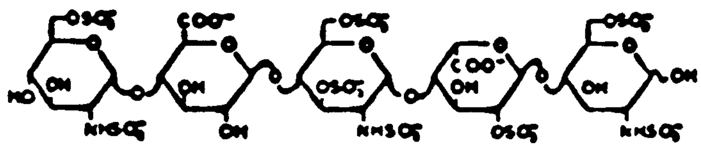

D E F G H

On sait également que certaines activités de l'héparine ou de fragments d'héparine peuvent être maintenues jusqu'à un certain degré en l'absence du site de liaison à l'AT III ou lorsque celui-ci est modifié, les structures responsables de telles activités n'étant cependant pas connues.

Ainsi Folkman et al (Science Vol. 221 - 1983 - p. 719-725) ont rapporté une action inhibitrice de l'angiogénèse pour des mélanges d'hexasaccharides dépourvus d'activité anticoagulante, utilisés en association avec des corticoïdes.

Karnovsky et al ont effectué des expériences sur des héparines O-désulfatées et N-désulfatées et ont montré qu'elles possèdaient toujours dans une certaine proportion, mais à un moindre degré, les activités inhibitrices de l'héparine standard sur la prolifération des cellules musculaires lisses.

En outre, une activité anti-complément de l'héparine, indépendante de l'activité anticoagulante, a été mise en évidence.

La demande européenne 0.208.623 décrit l'utilisation de certains poly ou oligosaccharides, pour l'obtention de médicaments actifs dans les pathologies du tissus conjonctif. Les héparines décrites comme étant utiles à la préparation de tels médicaments, possèdent une structure composée de motifs alternés D-glucosamine-acide uronique, [acide L-iduronique ou D-glucuronique].

D'autres travaux ont montré que l'activité anticoagulante de l'héparine pouvait être modifiée en effectuant des coupures au niveau des liaisons des carbones $C_2$-$C_3$ des acides uroniques non sulfatés à l'aide de periodate de sodium.

Ainsi,Fransson et Lewis ont décrit, dans Febs. Letters, vol. 97, n° 1, p. 119 - 123, 1979, des conditions opératoires consistant à soumettre l'héparine à l'action du periodate, soit à pH 3, à 4° C, soit à pH 7, à 37° C. Les chaînes d'héparine obtenues sont oxydées sélectivement au niveau des acides D-glucuronique dans le premier cas, alors qu'une oxydation au niveau de tous les motifs acides uroniques non sulfatés est obtenue avec le deuxième type de conditions.

Les chaînes résultantes sont réduites par $NaBH_4$ ou fragmentées selon un processus de $\beta$ élimination en milieu alcalin.

Les auteurs concluent que l'oxydation et le clivage des motifs acide D-glucuronique se traduisent par une légère diminution de poids moléculaire mais une rétention de l'activité anticoagulante.

Au contraire, la coupure à pH 7 et à 37° C des acides D-glucuronique et L-iduronique non sulfatés entraîne la suppression de l'activité anticoagulante et une plus forte fragmentation de la molécule.

Fransson et Havsmark (Carbohydrate Research, Vol 104, p. 139 - 146 (1982), lors d'une analyse structurale des préparations contenant des héparinoïdes, extraits du poumon bovin ou de la muqueuse de porc, ayant une activité anti-Xa élevée, ont constaté que lorsque l'oxydation periodique est effectuée à pH 3 et à 4°C, elle conduit à une coupure des acides D-glucuroniques situés à côté d'une N-acétylglucosamine. Par contre, lorsque l'oxydation periodique est effectuée à pH 7, et à 37°C, elle conduit à une coupure non sélective, au niveau de tous les acides uroniques.

Dans un article paru dans Carbohydrate Research 36, p. 339-348, 1974, Fransson a rapporté l'oxydation periodique des motifs uroniques dans le dermatane sulfate à divers pH, à 4° C ou 37° C.

L'auteur indique qu'en procédant à pH 5, les coupures au niveau des acides glucuroniques ne se font que dans une proportion inférieure à 5% et qu'en procédant à pH 3, ces coupures ne se font pas du tout. Ces résultats apparaissent donc contraires à ceux obtenus avec l'héparine pour laquelle à pH 3, les coupures se font préférentiellement au niveau des acides D-glucuroniques.

L'action du periodate a également été rapportée par Casu et al. dans Arzneim. Forsch./Drug Res. 36 (1) n° 4, p. 637-642, 1986.

Selon cet article, différentes préparations d'héparine sont soumises à une oxydation periodique (pH 5,3 à 4°C durant 24 h.) coupant entre les carbones en positions 2 et 3 de tous les acides uroniques non sulfatés. A titre de référence, une préparation est soumise à une étape ultérieure d'hydrolyse acide partielle et les fragments obtenus sont dialysés.

Cette étape d'hydrolyse acide partielle conduit à une fragmentation importante des chaînes et à une destruction au moins partielle de groupes fonctionnels, comme l'indique Fransson dans Carbohydr. Res. 80, 131-145 (1980).

De plus, selon cette méthode, on obtient obligatoirement un mélange de chaînes de PM variés dans un intervalle large, en particulier de nombreux di, tetra et hexasaccharides.

La demande de brevet WO 80/01383 décrit des fragments d'héparine ayant une activité anticoagulante sélective obtenue par différentes méthodes de dépolymérisation parmi lesquelles, la dépolymérisation à l'aide de l'acide periodique. Les produits décrits contiennent une unité acide L-iduronique non sulfatée qui est située en 3-5 unités "acide L-iduronique ou glucosamine" à partir de l'unité terminale non réductrice, comme aussi quelques unités acide D-glucuronique qui peuvent ne pas être situées aux extémités des chaînes des macromolécules. Par ailleurs, les produits décrits dans la demande de brevet WO 80/01383, contiennent environ 30 % des composants ayant une affinité pour l'antithrombine III,

La demande de brevet BE-A-620.906, décrit des macromolécules obtenues à partir de l'héparine non fractionnée ou fragmentée, après une scission glycolique, utiles pour le traitement de l'hyperlipémie.

Ces produits sont préparés après une modification très poussée de la structure de base de l'héparine - en mettant en oeuvre parmi d'autres méthodes, l'oxydation periodique - et possèdent une activité anticoagulante très diminuée, de l'ordre de 4 à 8 UI/mg (USP). Toutefois, pour avoir une telle activité anticoagulante, il est nécessaire de modifier environ 50 % des unités d'acide uronique de la structure de base de l'héparine, ce qui conduit à un rapport unités d'acide uronique/unités glucosamine, proche de 0,5.

Or, les inventeurs ont mis en évidence que pour l'obtention de compositions pharmaceutiques stables, utilisables en thérapeutique pour la régulation de certains systèmes physiologiques, les caractéristiques suivantes, en combinaison, sont essentielles :

longueur des fragments; taux de charge; absence du site de liaison à l'ATIII,
afin d'éviter les effets indésirables liés à une activité anticoagulante.

L'étude des processus de coupure à l'aide d'acide periodique et des moyens de fragmentation les ont conduits à constater qu'en réalisant l'oxydation periodique dans des conditions opératoires spécifiques, mais également en mettant en oeuvre une combinaison d'étapes particulières, il est possible d'obtenir une composition de fragments d'héparine de bas PM, mais dans un intervalle favorable, dépourvus du site de liaison à l'ATIII et ce, tout en conservant au moins la majeure partie de leurs groupes fonctionnels.

L'invention a donc pour but de fournir des compositions d'héparine qui, aux doses actives, soient dotées de propriétés pharmacologiques de grand intérêt, sensiblement équivalentes à celles de l'héparine,sans présenter les inconvénients d'être dotées de propriétés anticoagulantes.

Elle vise également à fournir un procédé de fragmentation de l'héparine permettant d'obtenir des fragments de PM donné, dépourvus cependant du site de liaison à l'ATIII et dont le taux de charge correspond sensiblement à celui des séquences correspondantes dans les chaînes d'héparine naturelle.

L'invention vise également les applications de ces compositions pour l'élaboration de médicaments actifs notamment sur la régulation de certains systèmes physiologiques.

L'invention a pour objet des compositions d'héparines dont 90 % ont un poids moléculaire entre 3.600 et 11.000 Da, caractérisées par le fait qu'elles sont essentiellement formées de fragments dépourvus d'enchaînements disaccharidiques du type acide uronique non sulfaté-glucosamine N-sulfate, ces fragments répondant à la formule générale I suivante :

$R-(X-Y)_n-R'$ (I)

dans laquelle

- X représente soit un motif acide iduronique sulfaté de formule II :

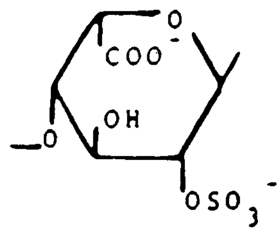

( I I )

soit, à raison de 1 motif pour 2 chaînes au moins, un motif acide uronique (D-glucuronique ou L-iduronique) non sulfaté ouvert entre les carbones en positions 2 et 3, de formule III :

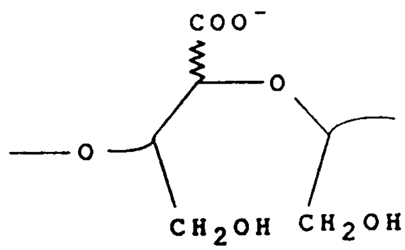

( I I I )

- Y représente un motif D-glucosamine de formule IV :

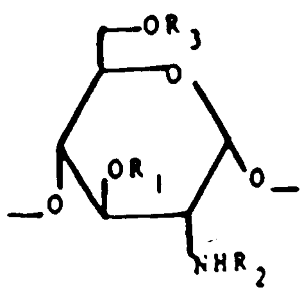

( IV )

. $R_1$ étant un atome d'hydrogène ou un groupe $-SO_3^-$
. $R_2$, un groupe $-SO_3^-$ ou $-CO-CH_3$, la proportion des groupes $-SO_3^-$ étant d'environ au moins 90%, et
. $R_3$, étant un groupe $-SO_3^-$ ou un atome d'hydrogène, la proportion des groupes $-SO_3^-$ étant d'environ au moins 70%,

- R représente un atome d hydrogène ou un motif :

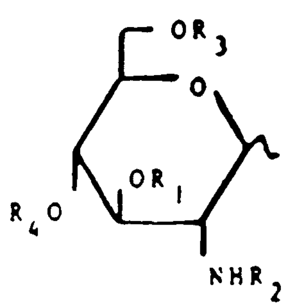

( V )

. $R_1$ à $R_3$ étant tels que définis ci-dessus, et
. $R_4$ représentant un atome d'hydrogène ou un résidu d'acide uronique,

- R' représente soit un atome d'hydrogène, soit un motif acide uronique naturel,soit un résidu d'acide uronique modifié au cours de l'oxydation periodique et dont les fonctions aldéhydes ont été réduites en alcools,

  avec $7 \leq n \leq 15$ pour les espèces majoritaires, ce qui correspond à des chaînes de PM de 4800 à 9000 environ,

  les poids moléculaires étant déterminés en HPLC avec une colonne TSK 2000 SW couplée à un détecteur photométrique à 205 nm, en utilisant $Na_2SO_4$ 0,5 M comme solvant, avec un débit de 1 ml/min,

  et leurs sels pharmaceutiquement acceptables.

On notera que les motifs X ouverts sont des motifs qui, au cours de l'étape de béta-élimination en pH alcalin, sont restés intégrés dans l'enchaînement glycosamino-glycanique. Il s'agit soit d'un acide D-glucuronique non sulfaté, soit d'acide L-iduronique non sulfaté, dont les liaisons entre les carbones en positions 2 et 3 ont été coupées.

Les compositions de l'invention présentent :

- un poids moléculaire moyen de l'ordre de 6000-7000 Da, plus précisément de 5800 à 7000 Da, notamment de l'ordre de 6000 Da, 70% des espèces étant compris entre 4800 et 9000 daltons et 90% entre 3600 et 11000 Da,
- un poids moléculaire au sommet du pic de l'ordre de 5500 a 6500 Da, plus précisément de 5500 à 6500 Da, notamment de l'ordre de 5500 à 6000 Da,
- moins de 5% de chaînes inférieures à des dodécasaccharides,
- moins de 5% de chaînes au-delà de 11.000.

Selon un autre aspect,les compositions d'héparine de l'invention sont telles qu'obtenues par fractionnement, à l'aide d'alcool, en présence d'un sel minéral, d'un mélange résultant de la dépolymérisation de l'héparine par action d'une base forte sur des chaînes d'héparine soumises au préalable à l'action de periodate, la dépolymérisation étant suivie d'une réduction des groupements aldehyde formés lors de l'oxydation periodique.

D'une manière avantageuse,les compositions de l'invention présentent un rapport des taux de groupes sulfate $SO_3^-$ et de groupes carboxyle $COO^-$ par mole compris entre 2,2 et 2,8. Ce rapport est notamment de 2,4. Ce taux élevé par rapport aux valeurs moyennes des chaînes d'héparine résulte de la structure des chaînes d'héparines de bas poids moléculaire selon l'invention, qui sont constituées pour l'essentiel d'unités disaccharidiques trisulfatées. Ces héparines de bas PM sont dites à structure régulière compte tenu de la présence de ces unités disaccharidiques et en référence à la littérature scientifique (PERLIN A.S., CASU, B. SANDERSON, GR. "220 MHz spectra of heparin, chondroitins and other mucopolysaccharides". Can. J. Chem. 1970; 48:2260-8).

L'invention vise également les sels de ces compositions, en particulier les sels de sodium, potassium, calcium et magnésium ainsi que les sels de cations organiques physiologiquement acceptables.

L'invention a également pour objet un procédé de préparation de compositions de fragments d'héparine tels que définis ci-dessus, comprenant l'oxydation ménagée de l'héparine à l'aide de periodate.

Le procédé de la présente invention est caractérisé en ce que :

a) on traite une solution aqueuse d'héparine à une concentration finale de 0,5 à 5%(p/v)avec un sel de l'acide periodique à une concentration finale de 0,5 à 4% (p/v), à un pH de 4,5 à 6,5, à une température de 0 à 10° C;

b) on traite les chaînes d'héparine ainsi obtenues avec une base forte, à un pH supérieur à 11 environ;

c) on traite les fragments de dépolymérisation ainsi obtenus avec un agent réducteur;

d) après élimination éventuelle de l'agent réducteur en excès, on précipite les fragments réduits, après addition d'un sel minéral, à l'aide d'un solvant alcoolique;

e) on traite une solution aqueuse du précipité ainsi obtenu additionné d'un sel minéral par de l'alcool pour éliminer les fragments de très bas poids moléculaire;

f) on récupère le produit précipité ainsi formé et on transforme, éventuellement, le sel correspondant à la base forte utilisée, en un autre sel pharmaceutiquement acceptable.

On notera que l'étape e correspond à un fractionnement afin d'éliminer certains chaînes et non à une précipitation globale.

Plus particulièrement, ce procédé comprend en combinaison les étapes suivantes :

- l'oxydation ménagée de l'héparine réalisée en faisant réagir de l'héparine, en solution aqueuse à une concentration finale de 0,5 à 5% (p/v) avec un sel de l'acide periodique à une concentration finale de 0,5 à 4% (p/v), à un pH situé entre 4,5 et 6,5, de préférence à un pH de 5, à une température de 0 à 10°C, durant environ 15 à 48 h, à l'abri de la lumière,

- la dépolymérisation des chaînes d'héparine obtenues, par addition d'une base forte telle que la soude, à un pH supérieur à 11 environ, notamment compris entre 11 et 12, avantageusement de 11,2 à 11,6 de préférence aux environs de 11,5;
- la réduction des fragments de dépolymérisation à l'aide d'un agent réducteur et, après élimination, le cas échéant, de l'agent réducteur n'ayant pas réagi,
- la récupération des fragments d'héparine réduits, par précipitation à l'aide d'un solvant dans lequel ils sont insolubles,
- l'isolement des fragments recherchés par fractionnement à l'aide d'alcool, en présence d'un sel minéral, d'une solution aqueuse obtenue en remettant en solution dans l'eau le précipité précédemment isolé et en récupérant le précipité formé.

La réalisation de la dépolymérisation suivant un processus particulier, combinée à l'utilisation dans le procédé de l'invention, d'une étape de fractionnement, permet d'isoler une composition de fragments répondant à un profil thérapeutique particulier et possédant notamment un indice thérapeutique satisfaisant.

Dans l'étape d'oxydation periodique, on utilise de préférence, l'héparine et le sel de l'acide periodique selon des quantités conduisant à des concentrations finales respectives de 1,5 à 5% et de 1,5 % à 2,5 % (p/v).

Le sel de l'acide periodique est constitué avantageusement par du métaperiodate de sodium.

Pour éliminer le periodate résiduel, on effectue une dialyse avec des boyaux de dialyse ayant une porosité de 3 à 4000 Da, pendant environ 15 h.

On peut également procéder par chromatographie sur résine échangeuse d'anions par exemple sur une résine telle que celle commercialisée sous la marque Amberlite IRA 400, cette résine étant utilisée un quantité suffisante pour retenir le periodate résiduel et les dérivés du periodate formés au cours de la réaction, soit 1/6 à 1/8 du volume réactionnel par exemple. Cette procédure plus rapide que la dialyse, de grande reproductibilité, permet de procéder à la bêta-élimination à partir de conditions facilement standardisées.

Selon un mode préféré de réalisation de l'invention, on met l'héparine en solution dans de l'eau, plus spécialement de l'eau déminéralisée, à 4° C, à une concentration d'environ 5% (p/v), on ajoute un sel d'acide periodique tel que du métaperiodate de sodium de manière à obtenir une concentration finale d'environ 2% (p/v). Le pH de la solution est immédiatement ajusté à 5 à l'aide d'acide chlorhydrique dilué ou de soude diluée.

La solution est abandonnée à l'obscurité, à + 4° C, de préférence 24 heures.

Afin d'éliminer le periodate résiduel, on effectue une dialyse avec des boyaux de dialyse ayant une porosité de 3 à 4000 Da, pendant environ 15 heures, contre de l'eau déminéralisée courante.

Les chaînes d'héparine obtenues sont soumises à une étape de dépolymérisation en milieu basique.

A cet effet, on ajoute une base forte, plus spécialement une lessive concentrée de soude, de manière à obtenir une molarité finale en base de 0,2 N.

La solution basique obtenue est soumise à agitation 2 heures à température ambiante.

On soumet alors les fragments de dépolymérisation de l'héparine à une étape de réduction afin de transformer les groupes aldéhyde résultant de la coupure de la liaison entre les carbones $C_2$ et $C_3$ des motifs uroniques.

On utilise un agent réducteur tel que le borohydrure de sodium, à raison de 50 mg par gramme d'héparine engagée, et on maintient l'agitation 6 heures à température ambiante.

L'agent réducteur n'ayant pas réagi est détruit par abaissement du pH à 4 à l'aide d'acide, par exemple de l'acide chlorhydrique, avantageusement sous agitation vigoureuse, pendant environ 15 minutes.

Les fragments d'héparine réduits sont récupérés par précipitation.

Avantageusement, on ajuste le pH à 7 à l'aide d'une base, notamment de la soude concentrée, puis on ajoute 20 g/litre de sel minéral et on effectue une précipitation à l'aide de 1,5 volume d'alcool.

Le sel minéral utilisé est avantageusement constitué par du chlorure de sodium. Pour la précipitation alcoolique, on a recours de préférence à de l'éthanol.

Le précipité formé est récupéré par centrifugation, lavé avec un solvant dans lequel il est insoluble, tel que l'éthanol, et séché à 40° C, sous vide.

Pour isoler de ce précipité les fragments de l'invention, on a recours à une étape de fractionnement.

On réalise avantageusement un fractionnement alcoolique en procédant comme suit :

Le précipité de fragments d'héparine est remis en solution dans de l'eau, plus spécialement de l'eau déminéralisée, à température ambiante à savoir de l'ordre de 18 à 20° C, de manière à obtenir une concentration de 5% (p/v).

On ajoute un sel minéral, tel que le chlorure de sodium, en quantité suffisante pour avoir une concentration finale de 1%. Le pH de la solution est ajusté à 3,5 par de l'acide, par exemple de l'acide

chlorhydrique dilué.

On ajoute alors sous agitation modérée 0,85 volume d'un solvant dans lequel les fragments recherchés sont insolubles, tel que l'éthanol.

L'ensemble est laissé au repos environ 10 heures à 18-20° C.

Le précipité est recueilli par centrifugation, lavé avec un solvant tel que l'éthanol et séché sous vide à 40° C pendant 24 heures.

Ce précipité peut éventuellement être soumis à une étape de purification supplémentaire, après remise en solution dans de l'eau déminéralisée, par une chromatographie sur une résine échangeuse d'anions, telle qu'une résine Amberlite IRA 400, $OH^-$ ayant un volume de l'ordre du 1/10 du volume réactionnel, afin d'éliminer d'éventuelles impuretés.

Il est constitué d'un mélange de fragments d'héparine dont la majorité des espèces a un PM compris entre 4800 à 9000 Da environ.

Le produit ainsi obtenu peut, le cas échéant, être transformé en un autre sel pharmaceutiquement acceptable, tel qu'un sel de calcium, un sel de potassium ou un sel de magnésium, selon les méthodes connues.

Les compositions d'héparine de l'invention, essentiellement formées de fragments de poids moléculaire d'environ 4800 à 9000, dépourvus du site de liaison à l'ATIII, permettent de mettre à profit des propriétés pharmacologiques de grand intérêt, qui sont rattachées aux régions régulières de l'héparine. Ces compositions aux doses actives n'ont qu'une très faible activité anti-coagulante.

L'étude de leurs propriétés pharmacologiques a ainsi montré que ces compositions exercent un effet inhibiteur sensiblement équivalent à celui de l'héparine sur la croissance des cellules musculaires lisses.

Diverses expériences ont permis de mettre en évidence d'autres effets inhibiteurs, en particulier vis-à-vis de l'activation du complément, et des réactions inflammatoires d'hypersensibilité de type retardé, ainsi que vis-à-vis de l'activité enzymatique de l'héparanase.

Elles peuvent exercer également une action potentialisatrice et stabilisante vis-à-vis de certains facteurs de croissance cellulaire.

Ces compositions sont, en outre, dotées d'une grande innocuité et sont particulièrement stables.

Elles sont ainsi particulièrement appropriées pour constituer des principes actifs de médicaments.

L'invention a donc pour objet des préparations pharmaceutiques caractérisées en ce qu'elles renferment une quantité efficace d'une composition essentiellement formée de fragments d'héparine, tels que définis ci-dessus, en association avec un véhicule pharmaceutique.

Compte tenu de leurs propriétés, les médicaments de l'invention sont utilisables tout spécialement dans les indications thérapeutiques suivantes :

- prévention de la prolifération des cellules musculaires lisses au cours des angioplasties,
- accélération de la réparation tissulaire, notamment lors de maladies cutanées,
- prévention de l'extension de lésions athérogènes évolutives et des phénomènes de dégénérescence arteriosclérotique,
- prévention des états de chocs,
- prévention de certains développements métastasiques.

Les préparations pharmaceutiques de l'invention sont administrables sous différentes formes.

Pour l'administration par voie orale, on a recours en particulier à des gélules, tablettes, comprimés, pilules, liposomes. Ces préparations renferment avantageusement de 50 mg à 5 g par unité de prise, de préférence 200 à 250 mg pour les gélules, tablettes et pilules.

En conséquence, les formes d'administration dépendent essentiellement de la dose à administrer. Les gélules, tablettes et pilules seront d'une utilisation pratique pour l'administration de faibles doses. Pour l'administration de doses plus élevées, les solutés buvables pourront être d'une utilisation plus pratique.

D'autres formes d'administration de l'invention sont constituées par des sprays, des aérosols, des pommades ou des crèmes.

L'invention concerne également des compositions pharmaceutiques injectables, stériles ou stérilisables pour l'administration tant par voie intraveineuse qu'intramusculaire ou sous-cutanée.

Ces solutions renferment avantageusement de 10 à 150 mg/ml environ de principe actif lorsqu'elles sont destinées à l'injection par voie sous-cutanée ou de 10 à 100 mg/ml environ, lorsqu'elles sont destinés à l'ijection intraveineuse ou à la perfusion.

A titre indicatif, afin d'illustrer l'invention, on indique, ci-après, un exemple de posologie utilisable chez l'homme : cette posologie comprend, par exemple, l'administration au patient d'environ 500 mg/prise, par voie sous-cutanée, deux à trois fois par jour. Par voie intraveineuse, on administre environ 1000 mg/j, sachant que, par perfusion, les quantités injectées peuvent être de plusieurs dizaines de ml. Ces administrations sont effectuées de manière discontinue à intervalles réguliers, ou continues par perfusion.

L'invention concerne encore les réactifs biologiques dont les principes actifs sont constitués par les compositions de fragments d'héparine telles que définies plus haut. Ces réactifs biologiques peuvent être utilisés comme références ou étalons dans des études comparatives dans différents systèmes physiologiques dans la régulation desquelles les glycosaminoglycanes sont impliqués.

D'autres caractéristiques et avantages de l'invention apparaîtront dans les exemples qui suivent et en se référant aux figures 1 à 5,

- les figures 1 et 3 d'une part et 2 et 4 d'autre part, représentant les courbes HPLC respectivement d'un mélange de dépolymérisation réduit et d'une composition selon l'invention,
- la figure 5, le spectre RMN du $^{13}C$ d'une composition selon l'invention.

EXEMPLE 1 : Procédé d'obtention d'une composition de fragments d'héparine.

1/ - Coupure des chaînes d'héparine à l'aide d'acide periodique

10 g d'héparine injectable de mucus de porc, sous forme de sel de sodium, titrant 157 ul/mg dans le dosage Codex et 155 u/mg dans le dosage anti-facteur Xa de Yin et al; sont mis en solution dans 250 ml d'eau déminéralisée à 4°C. Le pH de la solution est ajusté à 5,0 par de l'acide chlorhydrique concentré. 10 g de métaperiodate de sodium ($NaIO_4$, PM : 213,89) en solution dans 250 ml d'eau déminéralisée à 4° C sont ajoutés sous agitation modérée. Le pH de l'ensemble est ajusté à 5,0 par de l'acide chlorhydrique concentré. La solution est abandonnée 24 heures, à l'obscurité, en chambre froide à + 4°C.

2/ - Elimination du periodate residuel

On répartit ensuite la solution réactionnelle dans 3 boyaux de dialyse NOJAX 40 $^{R}$, (porosité de 3 à 4000 Da) et on la soumet à une dialyse 15 heures contre de l'eau déminéralisée courante.

3/ - Dépolymérisation en milieu basique

Aux 780 ml de solution obtenue après dialyse, sont ajoutés 16 ml de soude 10 N, et l'ensemble est soumis à agitation 3 heures à température ambiante (de l'ordre de 18-21°C).

4/ - Réduction

500 mg de borohydrure de sodium ($NaBH_4$, PM : 37,83) sont alors ajoutés et la solution est agitée de nouveau 4 heures à température ambiante. Son pH est ensuite amené à 4 à l'aide d'acide chlorhydrique concentré. Après 15 minutes d'agitation, le pH est ajusté à 7 à l'aide de soude concentrée.

Aux 820 ml de solution ainsi obtenue sont ajoutés 16,4 g de NaCl puis 1270 ml d'éthanol.

L'ensemble est laissé au repos 3 heures, puis centrifugé à 2500 t/minute pendant 20 minutes.

Le précipité est recueilli, remis en suspension dans 200 ml d'ethanol pur, broyé à l'Ultra-Turrax $^{R}$ et finalement récupéré par filtration sur buchner fritté.

Il est alors séché sous vide à 40°C pendant 5 heures.

On récupère ainsi 8,9 g de produit intermdiaire ayant les propriétés suivantes :

| | |
|---|---|
| - dosage Codex | 8 ul/mg |
| - dosage APTT | 7 ul/mg |
| - dosage Anti-Xa | 8 u/mg |

La répartition moléculaire de la composition est rapportée sur la figure 1 qui correspond à la courbe HPLC déterminée dans les conditions évoquées page 6.

5/ - Fractionnement alcoolique

Ces 8,9 grammes sont dissous dans environ 120ml d'eau déminéralisée à température ambiante. On ajoute 1,78 grammes de NaCl et le pH de la solution est abaissé à 3,5 à l'aide d'acide chlorhydrique. Le volume de la solution est ajusté à 178 ml à l'aide d'eau déminéralisée. 151 ml d'éthanol pur sont ajoutés sous agitation. L'agitation est maintenue 15 minutes après la fin de l'addition puis l'ensemble est laissé au repos 10 heures, à température ambiante.

Le précipité formé est recueilli par centrifugation 20 minutes à 2500 t/min. Il est remis en suspension dans 150 ml d'éthanol pur, broyé à l'Ultra-Turrax, récupéré par filtration sur buchner fritté, lavé par 300 ml d'éthanol pur et finalement séché sous vide à 40 °C pendant 24 heures.

On récupère ainsi 5,0 g sous forme de poudre blanche 5,0 g du produit IC 1772 ayant les caractéristiques suivantes :

| | |
|---|---|
| - titre Codex | 11 ul/mg |
| - titre APTT | 9 ul/mg |
| - titre Anti-Xa | 12 u/mg |

La distribution moléculaire de la composition obtenue apparaît à l'examen de la figure 2 qui correspond à la courbe HPLC, déterminée dans les conditions ci-dessus.

Analyse en RMN du $^{13}C$

Le spectre RMN pour le carbone 13 est représeté sur la figure 5. Ce spectre a été réalisé sur une solution, du composé dissous dans de l'oxyde de deutérium, à 25MHz, à 35 ° C. Les déplacements chimiques sont mesurés par rapport au méthanol (51,6ppm).

L'examen de ce spectre montre qu'il présente les signaux caractéristiques d'un enchaînement de disaccharides du type acide 2-O-sulfo-α-L-iduronique (1->4) 6-O-sulfo-N-sulfo-α-D-glucosamine (1->4).

On constate en particulier la présence des signaux des carbones anomères, à 101,7 ppm (acide 2-O-sulfo-α-L-iduronique) alors que les signaux caractéristiques des acides D-glucuronique et L-iduronique (104,5 ppm) non sulfatés ne sont pas présents, contrairement au spectre d'une préparation d'héparine dans laquelle ils peuvent représenter jusqu'à 30 à 40% du total des signaux des acides uroniques.

Dans la région des C-2 de glucosamine, seul le signal à 60,5 ppm (C-2 de la N-sulfo-glucosamine) est présent. Le signal caractéristique de la N-acétyl-glucosamine (56,4 ppm) est à peine décelable alors qu'il figure dans l'héparine de départ.

Dans la région des C-6 de glucosamine (62,5 pour C-6-OH et 69 pour C-6-OS). On constate la présence des deux signaux des espèces non sulfatée et sulfatée.

Il est important de noter que le rapport d'intensité des signaux à 99,4 ppm et 101,7 ppm est égal à 1 ce qui confirme la seule présence d'acide 2-O-sulfo-L-iduronique.

On décèle la présence de quelques résidus de N-acétyl-glucosamine. De même, le signal du NHAc (24,6 ppm) apparaît.

Analyse conductimétrique :

Le degré de sulfatation déterminé par conductimétrie est de 2,3. Le nombre de charges par unité disaccharidique est de 3,3.

EXEMPLE 2 :

1/ - 200 g d'héparine injectable, sel de sodium, titrant 154 ul/mg dans le dosage Codex et 158 u/mg dans le dosage anti-facteur Xa sont mis en solution dans 5 litres d'eau déminéralisée, à + 4 °C.

Le pH de la solution est ajusté à 5,0 par HCl concentré. On ajoute alors sous agitation modérée : 200 g de metaperiodate de sodium en solution dans 5 litres d'eau déminéralisée à + 4 °C. Le pH de l'ensemble est de nouveau ajusté à 5,0 par HCl concentré.

La solution obtenue est laissée 24 heures à l'obscurité, en chambre froide + 4 °C, sous agitation modérée.

2/ - Elle est ensuite répartie dans 50 boyaux de dialyse et dialysée 14 heures contre de l'eau déminéralisée courante, à température ambiante.

3/ - A l'issue de cette dialyse, on récupère 14,5 litres de solution à laquelle on ajoute 116 g de soude pure en pastilles. On agite la solution ainsi obtenue 3 heures à température ambiante.

4/ - 10 g de borohydrure de sodium sont ensuite ajoutés et l'agitation est poursuivie pendant 4 heures.

Le pH de la solution est abaissé à 4 à l'aide d'HCl concentré, pendant 15 minutes, puis il est de nouveau réajusté à 7 par de la soude concentrée;

Le volume de la solution ainsi obtenue est de 15,2 litres. On ajoute alors 304 grammes de NaCl puis 22,8 litres d'éthanol.

L'ensemble est laissé au repos 48 heures à température ambiante. Le surnageant limpide est siphonné, le précipité est recueilli, remis en suspension dans 3 litres d'éthanol pur, broyé à l'Ultra-Turrax, et récupéré par filtration sur verre fritté.

Il est finalement séché sous vide à 40 °C pedant 15 heures.

On récupère 181 grammes de fragments d'héparine ayant les caractéristiques suivantes :

| | |
|---|---|
| - dosage Codex<br>- dosage APTT<br>- dosage Anti-Xa | 10 ul/mg<br>9 ul/mg<br>9 u/mg |

répartition moléculaire : voir figure 3.

5/ - Ces 181 grammes sont dissous dans environ 3 litres d'eau déminéralisée, à température ambiante.

On ajoute 36,2 grammes de NaCl et le pH de la solution est ajusté à 3,5 par HCl concentré.

Le volume de la solution est ajusté à 3,62 litres à l'aide d'eau déminéralisée. On ajoute sous agitation modérée 3,077 litres d'ethanol pur. L'agitation est maintenue 15 minutes après la fin de l'addition et l'ensemble est laissé au repos 10 heures à température ambiante. Le précipité formé est recueilli par centrifugation 20 minutes à 2500 t/min. Il est remis en suspension dans 2 litres d'éthanol pur, broyé à l'Ultra-Turrax, récupéré par filtration sur fritté, lavé par 3 litres d'éthanol pur et finalement séché sous vide, à 40 °C, pendant 24 heures.

On obtient finalement 104 grammes de poudre blanche ayant les caractéristiques suivantes :

| | |
|---|---|
| - titre Codex<br>- titre APTT<br>- titre Anti-Xa | 13 ul/mg<br>10 ul/mg<br>13 u/mg |

répartition moléculaire : voir figure 4.

EXEMPLE 3:

1/ - Coupure des chaînes d'héparine à l'aide d'acide periodique

45 g d'héparine injectable de mucus de porc, sous forme de sel de sodium, sont mis en solution dans 600 ml d'eau déminéralisée. 18 g de métaperiodate de sodium en solution dans 200 ml d'eau déminéralisée, à 5 °C, sont ajoutés sous agitation modérée. On ajuste le pH à 5 par addition de HCl concentré et le volume réactionnel est amené à 900 ml avec de l'eau distillée. La solution est maintenue pendant 24 à 26 heures, à l'obscurité, en chambre froide (0-10 °C). Le précipité formé est éliminé par filtration.

2/ - Elimination du periodate résiduel

Les 900 ml de la réaction d'oxydation de l'héparine sont percolés sur une résine échangeuse d'ions Amberlite IRA 400, $Cl^-$ (Rohm and Haas Company, USA) ayant un volume de 1/8ème du volume réactionnel (110 ml), en 2 heures.

La colonne est rincée par 225 ml d'eau déminéralisée. Ce rinçage est combiné à la solution percolée. On obtient ainsi 1125 ml de solution débarrassée du periodate et de l'iodate. L'absence de periodate est contrôlée par titrimétrie. La courbe de titration de 5 ml de la solution d'oxyhéparine par 2,5 ml de soude 1 N permet de visualiser l'absence de periodate. Le periodate en solution se traduirait par une inflexion caractéristique pour un pKa d'environ 7,8.

3/ - Dépolymérisation en milieu basique

La bêta-élimination est initiée en ajoutant de la soude 10 N par étapes jusqu'à obtention d'un pH de 11,5. La réaction se poursuit pendant 1 heure à température ambiante (18-23 °C) sous agitation.

4/ - Réduction

On ajoute alors du borohydrure de sodium à raison de 10 g par 100 g de matière première engagée.

Cette réduction est réalisée pendant au moins 3 heures sous agitation. L'agent réducteur en excès est ensuite éliminé par addition de 25 g/l de NaCl puis le pH de la solution est ajusté à 4 à l'aide de HCl concentré. La solution est ensuite ajustée à un pH neutre à l'aide de NaOH concentrée.

On précipite le produit en ajoutant 1,5 volume d'éthanol pur. Le précipité est décanté pendant 48 à 72 heures, puis déshydraté à l'éthanol et séché sous vide à 40 ° C pendant 12 heures.

5/ - Fractionnement alcoolique

Le produit est repris dans de l'eau déminéralisée (180 ml pour 10 g d'héparine engagée). On ajoute 2g de NaCl pour 10 g. Le pH est ajusté à 3,5 et la solution complétée en eau déminéralisée au volume de 200 ml pour 10 g engagés.

On ajoute 0,85 volume d'éthanol pur sous agitation lente. Le précipité est laissé à décanter pendant 48 à 72 heures. Le précipité est repris, déshydraté à l'éthanol pur, broyé à l'Ultra-Turrax ® et séché à 40 ° C. Le produit se présente sous forme d'une poudre blanche. Le produit soluble dans l'alcool a été analysé en HPLC. On a constaté que les oligosaccharides ont un poids moléculaire moyen de l'ordre de 3500.

6/ - Purification

Le produit obtenu à l'étape précédente est mis en solution à 5% dans de l'eau déminéralisée et est purifié sur une colonne échangeuse d'anions Amberlite IRA 400, $OH^-$ (1/10 ° du volume réactionnel).

Le produit est ensuite testé pour ses caractéristiques :

. Taux de sulfatation (déterminé selon Helbert J.R. et Marini M.A., Biochemistry, 1963, 2, 1101-1106).
  Le rapport $SO_3/COO^-$ est de 2,2 à 2,4.

. Activités anti-IIa et anti-Xa :
  - TCK (1) : 4 u/mg
  - USP (2) : 13 u/mg
    Activité anti-IIa (3) ; 12 u/mg
  - Activité anti-Xa (4) (Yin et Wessler) : 8 u/mg
  - Activité anti-Xa (sur substrat chromogène
    S 2222 en système purifié) : 1 u/mg

Les références des systèmes utilisés pour effectuer les mesures sont les suivantes :

(1) : R.R. Proctor et S. Rapaport - Ann. J. Clin. Pathol., 1961, 16, 212-219.
(2) : XXIe Pharmacopée américaine.
(3) : Mesurée par l'allongement du temps de thrombine.
(4) : E.T. Yin, S. Wessler, J.V. Butler - J. Lab. Clin. Med., 1973, 81, 298-310.

MISE EN EVIDENCE DE CYCLES D'ACIDES URONIQUES OUVERTS ENTRE C2 ET C3

La dégradation de Smith à pH 3 et 100 ° C pendant 1 heure d'une solution à 5% d'IC 1772 provoque la coupure spécifique des chaînes oligosaccharidiques au niveau des acides uroniques ouverts entre C2 et C3. Il en résulte une baisse du poids moléculaire moyen du produit, observée par gel filtration sur TSK 2000 avec détection réfractométrique.

Les résultats sont exprimés de la manière suivante :

- Mna représente le "number average molecular weight" tel que défini par W.W. YAU, J.J. KIRKLAND et D.D. BLY (in Modern size-exclusion liquid chromatography, Wiley Interscience Publication) du produit testé tel que;
- Mnb représente le "number average molecular weight " après que l'on ait procédé à la dégradation de Smith comme indiqué ci-dessus;
- (Mna/Mnb) - 1 donne le nombre de sites sensibles à cette dégradation de Smith par chaîne oligosaccharidique, ce qui équivaut au nombre d'acides uroniques ouverts entre C2 et C3.

L'essai a été réalisé sur deux lots de produits IC 1772 :

| | P 46 VH | P 55 VH |
|---|---|---|
| Mna | 5503 | 5573 |
| Mnb | 3896 | 3745 |
| (Mna/Mnb) - 1 | 0,4 | 0,5 |

On constate donc que, dans les conditions de l'analyse IC 1772 contient un acide uronique ouvert toutes les deux chaînes, au moins.

EFFET ANTICOAGULANT DE IC 1772 EN PLASMA HUMAIN

On rapporte, ci-après, les résultats obtenus concernant :

1. les activités anti-IIa et anti-Xa, in vitro, dans différents systèmes.
2. les temps de coagulation par la thrombine (TCT).

1/ - Activités anti-IIa et anti-Xa, *in vitro*

| ESSAI | IC 1772 u/mg | Héparine Standard u/mg |
|---|---|---|
| TCK[1] | 10 | 160 |
| USP[2] | 13 - 15 | 160 |
| Activité anti-IIa[3] | 16 | 160 |
| Activité anti-IIa (sur substrat chromogène S 2238 en système purifié) | 36 | 160 |
| Activité anti-IIa (sur substrat chromogène S 2238 en système plasmatique) | 1 | 160 |
| Activité anti-Xa[4] (Yin et Wessler) | 12 - 15 | 160 |
| Activité anti-Xa (sur substrat chromogène S 2222 en système purifié) | 2 - 3 | 160 |
| Activité anti-Xa (sur substrat chromogène S 2222 en système plasmatique) | 5 - 10 | 160 |

Les références des systèmes utilisés pour effectuer les mesures sont les suivantes :

1/ R.R. Proctor et S. Rapaport - Am. J. Clin. Pathol., 1961, 36, 212-219,
2/ XXIème Pharmacopée américaine
3/ Mesurée par l'allongement du temps de thrombine
4/ E.T. Yin, S. Wessler, J.V. Butler, J. Lab. Clin. Med., 1973, 81, 298-310.

2/ -TCT:

On rapporte dans le tableau 1 ci-après, les résultats sous forme de temps de coagulation exprimé en secondes, de 3 essais effectués avec les 3 types de plasmas utilisés pour étudier l'activité APTT. Le

contrôle est effectué en milieu plasmatique normal. Les résultats correspondent à la moyenne de deux essais indépendants.

TABLEAU 1

| µg/ml | Plasma normal | Plasmas déplétés en | | |
|---|---|---|---|---|
| | | ATIII | HC II | ATIII et HCII |
| 0 | 22 | 20 | 20 | 20 |
| 2,5 | 36 | 26 | 24 | 22 |
| 5 | 110 | 51 | 27 | 22 |
| 10 | 300 | 300 | 40 | 22 |

On constate aux doses de 5 et surtout 10 ug/ml un allongement du temps de thrombine qui semble dépendre de HCII.

- INHIBITION DE LA PROLIFERATION DES CELLULES MUSCULAIRES LISSES (CML) IN VITRO.

Modèle expérimental :

Les cellules musculaires lisses (CML) proviennent d'un segment abdominal de l'aorte de rat Sprague Dawley. De petits morceaux de media sont mis en culture en milieu RPMI-1640 additionné de 20% de sérum de veau foetal (SVF). Au bout de 1 à 2 semaines, les CML migrent hors des tissus et commencent à proliférer.

5-8.$10^3$ CML sont mises en culture dans des plaques multi-puits. Après 24 heures, on arrête leur croissance par un lavage suivi de l'addition de milieu RPMI + 2% de plasma déplaquetté (ou RPMI + 0,4% de SVF) pendant 72 heures.

Les cellules sont alors replacées pendant 5 à 7 jours en milieu RPMI additionné de 20% de SVF avec ou sans le composé à tester, ce dernier à différentes concentrations.

La croissance nette des CML, dans les essais témoins ou additionnés des produits à tester, est obtenue en soustrayant le nombre de cellules au départ du nombre de cellules à la fin de l'expérience (mesure en duplicate par compteur Coulter).

Le % d'inhibition est donné par la formule suivante :

$$\%\ d'inhibition = \left[1 - \frac{\text{croissance nette des cellules testées}}{\text{croissance nette des cellules témoins}}\right] X\ 100$$

(voir Castellot et al., J. Cell. Biol., 102, 1986, 1979-1984).

Les résultats obtenus selon la concentration de IC 1772 en culture sont les suivants (à titre comparatif, on rapporte les valeurs d'inhibition obtenues avec l'héparine).

| Quantité de produit | inhibition | |
|---|---|---|
| | IC 1772 | Héparine |
| 1 µg/ml culture | 25% | 20% |
| 10 µg/ml " | 45% | 60% |
| 100 µg/ml " | 70% | 80% |

On constate une activité dans ce modèle expérimental très proche de celle de l'héparine standard.

- INHIBITION DE LA PROLIFERATION DES CELLULES MUSCULAIRES LISSES (CML) IN VIVO : MODELE DU CATHETER BALLON.

Modèle expérimental:

L'expérience est menée sur des rats mâles Sprague Dawley âgés de 5 mois et pesant environ 500 g.

Les animaux sont anesthésiés et l'endothélium de l'artère carotide gauche est dénudé par le passage intraluminal d'un cathéter ballon à embolectomie introduit dans la branche externe de la carotide.

Le produit à tester ou une solution témoin stérile est administré en infusion continue dans de la solution lactosée de Ringer dans la veine jugulaire gauche
(utilisation d'une pompe osmotique à infusion (Alzet) placée sur le dos de l'animal). Le traitement est poursuivi pendant 4 semaines à raison de 2,5 ul/heure. La dose administrée a été de 1 mg/kg/heure.

Après 28 jours les animaux sont anesthésiés et les artères carotides prélevées. A 17, 9 et 1 heure avant l'anesthésie, les animaux reçoivent une injection intrapéritonéale de thymidine tritiée.

Les résultats sont exprimés par le contenu en DNA dans les carotides droite (CD) lésées et gauche (CG) non lésées selon le mode de calcul suivant :

$$\text{Inhibition } (\%) = \left[ 1 - \frac{\text{DNA}^{*} \text{ animaux traités}}{\text{DNA}^{*} \text{ animaux contrôle}} \right] \times 100$$

$$\text{DNA}^{*} = \frac{\text{DNA}_{CG} - \text{DNA}_{CD}}{\text{DNA}_{CD}}$$

(voir A.W. Clowes et M.M. Clowes, Labor. Investig., 1985, 52 (6), 612-616).

Résultats:

Dans un premier essai portant sur 10 animaux, on constate avec le produit testé IC 1772 une inhibition proche de celle de l'héparine d'environ 50%.

. INHIBITION DU SYSTEME DU COMPLEMENT

L'héparine inhibe la génération de la $C_3$ convertase amplificatrice alterne du complément, en inhibant la formation du complexe bimoléculaire entre les protéines $C_3b$ et B.

L'effet de l'héparine et du produit IC 1772 sur la liaison C3b-B a été étudié en utilisant des protéines B marquées à $^{125}I$ ($^{125}I$-B) et des érythrocytes de moutons porteurs de protéine $C_3b$ ($E^SC_3b$).

On appelle $IC_{50}$ la concentration d'héparine ou de l'oligosaccharide testé nécessaire pour inhiber 50% de la formation du complexe $C_3b$-B.

Cette mesure est faite in vitro, dans un système de protéines purifiées.

. Système expérimental

On incube des $E^SC_3b$ (0,75-2,5 x $10^7$) dans différentes concentrations de $^{125}I$-B dans un tampon véronal contenant 0,1% de gélatine et 5mM $Mg^{2+}$ pendant 30 mn à 30° C.

Des échantillons de 70 µl, en double pour chaque réaction, sont déposés sur 300 µl d'un mélange de dibutylphtalate (Merck-Clevenot, France) et dinonylphtalate (Coger, Paris) (7:3 v/v) dans des tubes de polypropylène de 0,5 ml.

Les tubes sont centrifugés pendant une minute à 8000 g dans un microfuge Beckman (Beckman, Paris), puis coupés juste au-dessus des précipités. La radioactivité du ligand lié est comptée.

Le produit IC 1772 a été dosé comparativement à l'héparine. Les résultats exprimés en IC 50 sont les suivants :

IC 1772 : 0,4 µg/ml

Héparine standard : 0,5 µg/ml

- Temps de saignement :

Le produit est administré chez le lapin par voie intraveineuse à la dose de 5 mg/kg, 15 minutes et une heure avant l'expérience.

Le modèle expérimental est celui de Cade, tel que décrit par Cade et al dans Thromb. Res. 35, 613-625, 1986.

Les essais effectués montrent que le produit n'entraîne aucune augmentation du temps de saignement à la dose de 5 mg/kg par voie intraveineuse.

- Etude de l'activité antithrombotique de IC 1772

Le modèle utilisé est le suivant :

Les animaux sont anesthésiés avec 70 mg/kg de Ketaset (R) (Bristol Lab, Syracuse, NY) par voie intramusculaire. Par une technique chirurgicale, on isole une longueur de 2 cm sur les veines jugulaires droite et gauche. On injecte par voie intraveineuse dans la veine marginale de l'oreille le produit à tester, 5 minutes exactement avant l'injection d'une substance thrombogénique, par exemple un mélange de complexe concentré prothrombonique et de venin de vipère venum (PCC/RVV). Au bout de 20 secondes on effectue la ligature de la veine jugulaire, et après 10 mn de stase, on retire les segments de veine que l'on place dans le sérum physiologique, puis on évalue le degré de formation de caillot selon une échelle de 0 à 4 (4 représente un caillot unique sans érythrocytes libres) (FAREED, J. WALENGA, J.M., KIUMAR, 2. and ROCK, A. "A modified stasis thrombosis model to study the antithrombotic actions of heparin and its fractions. Sem. Thromb. Hemost. 11(2), 155-175, 1985).

IC 1772, administré par voie intraveineuse, à la dose de 1 mg/kg à un groupe de 10 lapins, a montré une très bonne activité antithrombotique chez tous les animaux.

**Revendications**

**Revendications pour les Etats contractants suivants : AT, BE, CH, DE, FR, GB, GR, IT, LI, LU, NL, SE**

**1.** Composition d'héparines dont 90 % ont un poids moléculaire entre 3600 et 11000 Da, caractérisée en ce qu'elle est formée de fragments dépourvus d'enchaînements disaccharidiques du type acide uronique non sulfaté glucosamine N-sulfate, ces fragments répondant à la formule générale I suivante :

$R - (X - Y)_n - R'$ (I)

dans laquelle

- X représente soit un motif acide iduronique sulfaté de formule II :

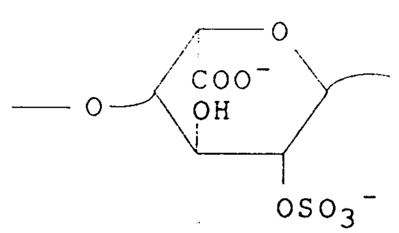

(II)

soit, à raison de 1 motif pour 2 chaînes au moins, un motif acide uronique (D-glucuronique ou L-iduronique) non sulfaté, ouvert entre les carbones en positions 2 et 3, de formule III :

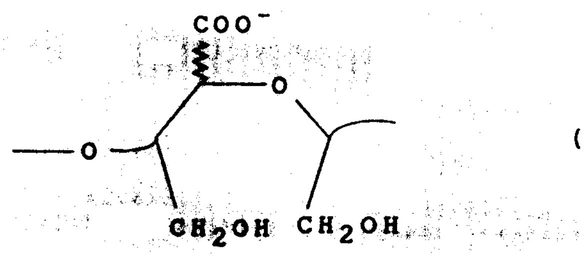

(III)

- Y représente un motif D-glucosamine de formule IV :

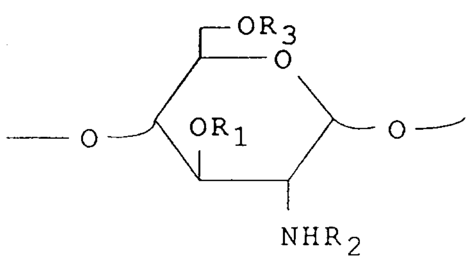

(IV)

- $R_1$, étant un atome d'hydrogène ou un groupe $-SO_3^-$
- $R_2$, un groupe $-SO_3^-$ ou $-CO-CH_3$, la proportion des groupes $-SO_3^-$ étant au moins 90 %, et
- $R_3$, étant un groupe $-SO_3^-$ ou un atome d'hydrogène, la proportion des groupes $-SO_3^-$ étant au mois 70 %,

- R représente un atome d'hydrogène ou un motif de formule V :

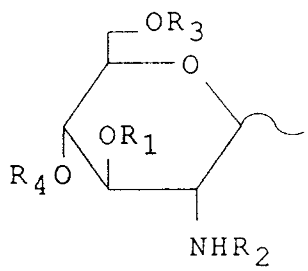

(V)

- $R_1$ à $R_3$ étant tels que définis ci-dessus, et
- $R_4$ représentant un atome d'hydrogène ou le résidu d'acide uronique,

- R' représente soit un atome d'hydrogène, soit un motif acide uronique naturel, soit le résidu d'acide uronique modifié au cours de l'oxydation periodique et dont les fonctions aldéhydes ont été réduites en alcools,

avec $7 \leqq n \leqq 15$ pour les espèces majoritaires, ce qui correspond à des chaînes de PM de 4800 à 9000,

les poids moléculaires étant déterminés en HPLC avec une colonne TSK 2000 SW couplée à un détecteur photométrique 205 nm, en utilisant $Na_2SO_4$ 0,5 M comme solvant, avec un débit de 1 ml/min,

et leurs sels pharmaceutiquement acceptables.

**2.** Composition selon la revendication 1, caractérisée en ce qu'elle présente en moyenne 3,3 charges par unités disaccharidiques.

**3.** Composition selon l'une quelconque des revendications 1 ou 2, caractérisée en ce qu'elle présente :

- un poids moléculaire moyen de l'ordre de 5800 à 7000 Da, 70 % des espèces étant comprises entre 4800 et 9000 daltons, et 90 % entre 3600 et 11000 Da,
- un poids moléculaire au sommet du pic de l'ordre de 5500 à 6500 Da,

- moins de 5 % de chaînes inférieures à des dodecasaccharides,
- moins de 5 % de chaînes au delà de 11000.

**4.** Composition selon l'une quelconque des revendications 1 à 3, caractérisée en ce que le spectre RMN est conforme à celui de la figure 5.

**5.** Composition selon l'une quelconque des revendications 1 à 4, caractérisée en ce que les fragments qu'elle renferme se présentent sous la forme de sels de sodium, de potassium, de calcium ou de magnesium.

**6.** Procédé de préparation de compositions d'héparines de bas poids moléculaire, telles que définies dans la revendication 1, caractérisé en ce que :

a)on traite une solution aqueuse d'héparine à une concentration finale de 0,5 à 5 % (p/v) avecun sel de l'acide periodique à une concentration finale de 0,5 à 4 % (p/v) à un pH de 4,5 à 6,5 à une température de 0 à 10 ° C ;

b)on traite les chaînes d'héparine ainsi obtenues avec une base forte, à une molarité finale en base de 0,1 à 0,3 N ;

c)on traite les fragments de dépolymérisation ainsi obtenus avec un agent réducteur ;

d)après élimination éventuelle de l'agent réducteur en excès, on précipite les fragments réduits après addition d'un sel minéral à l'aide d'un solvant alcoolique ;

e)on traite une solution aqueuse du précipité ainsi obtenu additionné d'un sel minéral, par de l'alcool ;

f)on récupère le produit précipité ainsi formé et on transforme éventuellement le sel correspondant à la base forte utilisée dans un autre sel pharmaceutiquement acceptable.

**7.** Procédé selon la revendication 6, caractérisé en ce qu'il comprend en combinaison les étapes suivantes :

- l'oxydation ménagée de l'héparine réalisée en faisant réagir de l'héparine, en solution aqueuse à une concentration finale de 0,5 à 5 % (p/v) avec un sel de l'acide periodique à une concentration finale de 0,5 à 4 % (p/v) à un pH situé entre 4,5 et 6,5, à une température de 0 à 10 ° C, durant environ 15 à 48 h à l'abri de la lumière,
- la dépolymérisation des chaînes d'héparine obtenues, par addition d'une base forte, selon une quantité conduisant à une molarité finale en base de 0,1 à 0,3 N , à un pH compris entre 11 et 12,
- la réduction des fragments de dépolymérisation à l'aide d'un agent réducteur et, après élimination, le cas échéant, de l'agent réducteur n'ayant pas réagi,
- la récupération des fragments d'héparine réduits par précipitation à l'aide d'un milieu solvant dans lequel ils sont insolubles,
- l'isolement des fragments recherchés par fractionnement à l'aide d'alcool, en présence d'un sel minéral, d'une solution aqueuse obtenue en remettant en solution dans l'eau le précipité précédemment isolé et en récupérant le précipité formé.

**8.** Procédé selon la revendication 6 ou 7, caractérisé en ce que dans l'étape d'oxydation periodique, on utilise l'héparine et le sel de l'acide periodique selon des quantités conduisant à des concentrations finales respectives de 1,5 % à 5 % et de 1,5 % à 2,5 % (p/v).

**9.** Procédé selon l'une quelconque des revendications 6 à 8, caractérisé en ce que l'on réalise l'étape d'oxydation periodique à pH 5, à 4 ° C.

**10.** Procédé selon l'une quelconque des revendications 6 à 9, caractérisé en ce que le sel de l'acide periodique est du metaperiodate de sodium.

**11.** Procédé selon l'une quelconque des revendications 6 à 10, caractérisé en ce que pour éliminer le periodate résiduel on effectue une dialyse avec des boyaux de dialyse ayant une porosité de 3 à 4000 Da, pendant environ 15h.

**12.** Procédé selon l'une quelconque des revendications 6 à 11, caractérisé en ce que la récupération des fragments d'héparine réduits est réalisée en ajustant le pH à 7, puis après addition d'un sel minéral tel

que du NaCl, en ajoutant 1 à 1,5 volume d'un solvant tel que l'éthanol.

**13.** Procédé selon l'une quelconque des revendications 6 à 12, caractérisé en ce qu'on dissout, à raison de 5 % (p/v), les fragments précipités réduits d'héparine dans de l'eau additionnée d'un sel minéral, afin d'avoir une concentration finale de 1 %, le pH de cette solution ayant été ajusté à 3,5, et qu'on ajoute 0,85 volume d'un solvant alcoolique.

**14.** Composition pharmaceutique, caractérisée en ce qu'elle renferme une quantité efficace d'une composition selon l'une quelconque des revendications 1 à 5, en association avec un véhicule pharmaceutique.

**15.** Composition pharmaceutique selon la revendication 14, caractérisée en ce qu'elle se présente sous la forme d'une solution concentrée, injectable, stérile, contenant de 10 à 150 mg/ml , lorsqu'elle est destinée à l'injection sous-cutanée, ou de 10 à 100 mg/ml , lorsqu'elle est destinée à l'injection intraveineuse ou à la perfusion.

**16.** Réactif biologique constitué par une composition selon l'une quelconque des revendications 1 à 5.

**Revendications pour l'Etat contractant suivant : ES**

**1.** Procédé de préparation d'une composition d'héparines dont 90 % ont un poids moléculaire entre 3600 et 1000 Da, formée de fragments dépourvus d'enchaînements disaccharidiques du type acide uronique non sulfaté glucosamine N-sulfate, ces fragments répondant à la formule générale I suivante :

$R\text{-}(X\text{-}Y)_n\text{-}R'$ (I)

dans laquelle

- X représente soit un motif acide uronique sulfaté de formule II :

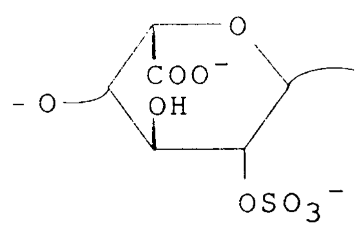

(II)

soit, à raison de 1 motif pour 2 chaînes au moins, un motif acide uronique (D-glucuronique ou L-iduronique) non sulfaté, ouvert entre les carbones en positions 2 et 3, de formule III :

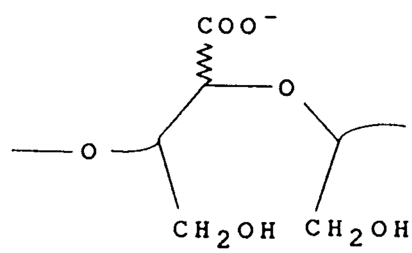

(III)

- Y représente un motif D-glucosamine de formule IV :

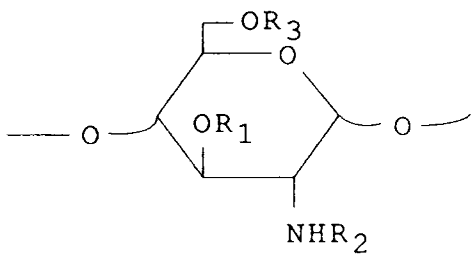

(IV)

- • $R_1$, étant un atome d'hydrogène ou un groupe $-SO_3^-$
- • $R_2$, un groupe $-SO_3^-$ ou $-CO-CH_3$, la proportion des groupes $-SO_3^-$ étant au moins 90 %, et
- • $R_3$, étant un groupe $-SO_3^-$ ou un atome d'hydrogène, la proportion des groupes $-SO_3^-$ étant au mois 70 %,

- R représente un atome d'hydrogène ou un motif de formule V :

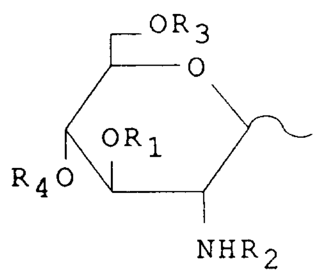

(V)

- • $R_1$ à $R_3$ étant tels que définis ci-dessus, et
- • $R_4$ représentant un atome d'hydrogène ou le résidu d'acide uronique,

- R' représente soit un atome d'hydrogène, soit un motif acide uronique naturel, soit le résidu d'acide uronique modifié au cours de l'oxydation periodique et dont les fonctions aldéhydes ont été réduites en alcools,

avec $7 \leqq n \leqq 15$ pour les espèces majoritaires, ce qui correspond à des chaînes de PM de 4800 à 9000,

les poids moléculaires étant déterminés en HPLC avec une colonne TSK 2000 SW couplée à un détecteur photométrique 205 nm, en utilisant $Na_2SO_4$ 0,5 M comme solvant, avec un débit de 1 ml/min,

et de leurs sels pharmaceutiquement acceptables,

caractérisé en ce que :

a) on traite une solution aqueuse d'héparine à une concentration finale de 0,5 à 5 % (p/v) avec un sel de l'acide periodique à une concentration finale de 0,5 à 4 % (p/v) à un pH de 4,5 à 6,5 à une température de 0 à 10° C;

b) on traite les chaînes d'héparine ainsi obtenues avec une base forte, à une molarité finale en base de 0,1 à 0,3 N;

c) on traite les fragments de dépolymérisation ainsi obtenus avec un agent réducteur;

d) après élimination éventuelle de l'agent réducteur en excès, on précipite les fragments réduits après addition d'un sel minéral à l'aide d'un solvant alcoolique;

e) on traite une solution aqueuse du précipité ainsi obtenu additionné d'un sel minéral, par de l'alcool;

f) on récupère le produit précipité ainsi formé et on transforme éventuellement le sel correspondant à la base forte utilisée dans un autre sel pharmaceutiquement acceptable.

**2.** Procédé selon la revendication 1, caractérisé en ce qu'il comprend en combinaison les étapes suivantes :

- l'oxydation ménagée de l'héparine réalisée en faisant réagir de l'héparine, en solution aqueuse à une concentration finale de 0,5 à 5 % (p/v) avec un sel de l'acide periodique à une concentration finale de 0,5 à 4 % (p/v) à un pH situé entre 4,5 et 6,5, à une température de 0 à 10° C, durant environ 15 à 48 h à l'abri de la lumière,
- la dépolymérisation des chaînes d'héparine obtenues, par addition d'une base forte, selon une quantité conduisant à une molarité finale en base de 0,1 à 0,3 N, à un pH compris entre 11 et 12,
- la réduction des fragments de dépolymérisation à l'aide d'un agent réducteur et, après élimination, le cas échéant, de l'agent réducteur n'ayant pas réagi,
- la récupération des fragments d'héparine réduits par précipitation à l'aide d'un milieu solvant dans lequel ils sont insolubles,
- l'isolement des fragments recherchés par fractionnement à l'aide d'alcool, en présence d'un sel minéral, d'une solution aqueuse obtenue en remettant en solution dans l'eau le précipité précédemment isolé et en récupérant le précipité formé.

**3.** Procédé selon la revendication 1 ou 2, caractérisé en ce que dans l'étape d'oxydation periodique, on utilise l'héparine et le sel de l'acide periodique selon des quantités conduisant à des concentrations finales respectives de 1,5 % à 5 % et de 1,5 % à 2,5 % (p/v).

**4.** Procédé selon l'une quelconque des revendications 1 à 3, caractérisé en ce que l'on réalise l'étape d'oxydation periodique à pH 5, à 4° C.

**5.** Procédé selon l'une quelconque des revendications 1 à 4, caractérisé en ce que le sel de l'acide periodique est du métaperiodate de sodium.

**6.** Procédé selon l'une quelconque des revendications 1 à 5, caractérisé en ce que pour éliminer le periodate résiduel on effectue une dialyse avec des boyaux de dialyse ayant une porosité de 3 à 4000 Da, pendant environ 15 h.

**7.** Procédé selon l'une quelconque des revendications 1 à 6, caractérisé en ce que la récupération des fragments d'héparine réduits est réalisée en ajustant le pH à 7, puis après addition d'un sel minéral tel que du NaCl, en ajoutant 1 à 1,5 volume d'un solvant tel que l'éthanol.

**8.** Procédé selon l'une quelconque des revendications 1 à 7, caractérisé en ce qu'on dissout, à raison de 5 % (p/v) les fragments précipités réduits d'héparine dans de l'eau additionnée d'un sel minéral, afin d'avoir une concentration finale de 1 %, le pH de cette solution ayant été ajusté à 3,5, et qu'on ajoute 0,85 volume d'un solvant alcoolique.

**9.** Procédé de fabrication d'une composition pharmaceutique, caractérisé en ce que l'on met une quantité efficace d'une composition telle que définie à la revendication 1 en association avec un véhicule pharmaceutique, sous une forme pharmaceutiquement acceptable.

**Claims**

**Claims for the following Contracting States : AT, BE, CH, DE, FR, GB, GR, IT, LI, LU, NL, SE**

**1.** A composition of heparins of which 90% have a molecular weight between 3,600 and 11,000 Da, characterized in that it is composed of fragments lacking repeating disaccharide sequences of the non-sulfated uronic acid glucosamine N-sulfate type, these fragments corresponding to the following general Formula I:

$R\text{-}(X\text{-}Y)_n\text{-}R'$     (I)

in which

- X represents either a sulfated iduronic acid residue of Formula II:

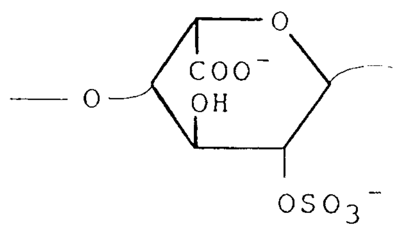

(II)

or, to the extent of about 1 residue per 2 chains at least, a non-sulfated uronic acid residue (D-glucuronic or L-iduronic), ring-opened between the carbon atoms at positions 2 and 3, of Formula III:

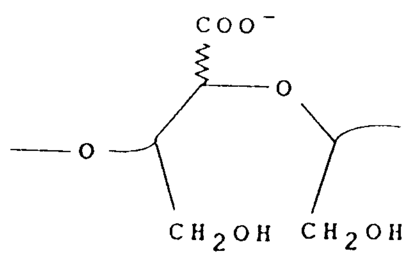

(III)

- Y represents a D-glucosamine residue of Formula IV:

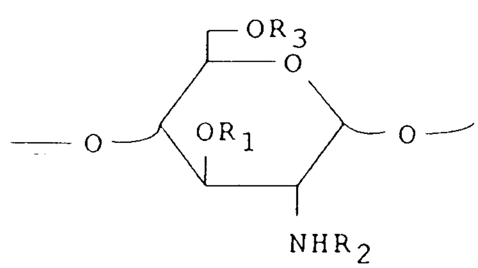

(IV)

$R_1$ being a hydrogen atom or a $-SO_3^-$ group
$R_2$ being a $-SO_3^-$ group or a $-CO-CH_3$ group, the proportion of the $-SO_3^-$ groups being at least 90%, and
$R_3$ being a $-SO_3^-$ group or a hydrogen atom, the proportion of the $-SO_3^-$ groups being at least 70%,

- R represents a hydrogen atom or a residue of formula V:

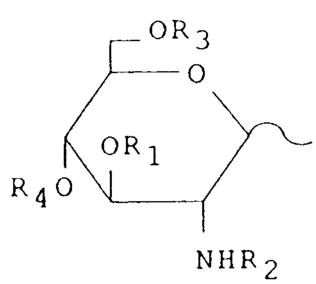

(V)

$R_1$ to $R_3$ being as defined above, and
$R_4$ representing a hydrogen atom or a uronic acid residue,

- R' represents either a hydrogen atom, or an unmodified uronic acid residue, or a uronic acid residue modified during the course of periodic oxidation and the aldehyde functions of which have been reduced to alcohols, with $7 \leqq n \leqq 15$ for the major species, which corresponds to chains of MW of 4,800 to 9,000, the molecular weights being determined by HPLC with a TSK 2000 SW column coupled to a 205 nm photometric detector and using 0.5M $Na_2SO_4$ as solvent with a flow rate of 1 ml/min;and the pharmaceutically acceptable salts thereof.

**2.** A composition according to Claim 1, characterized in that it possesses on average 3.3 charges per disaccharide unit.

**3.** A composition according to either one of Claims 1 or 2, characterized in that it possesses:
- a mean molecular weight of the order of 5,800 to 7,000 Da, 70% of the species being between 4,800 and 9,000 daltons, and 90% between 3,600 and 11,000 Da,
- a molecular weight at the highest point of the peak of the order of 5,500 to 6,500 Da,
- less than 5% of chains smaller than dodecasaccharides,
- less than 5% of chains larger than 11,000.

**4.** A composition according to any one of Claims 1 to 3, characterized in that the NMR spectrum corresponds to that of Figure 5.

**5.** A composition according to any one of Claims 1 to 4, characterized in that the fragments which it contains are in the form of salts of sodium, potassium, calcium or magnesium.

**6.** A process for the preparation of compositions of heparins of low molecular weight such as those defined in Claim 1, characterized in that:

a) an aqueous solution of heparin at a final concentration of 0.5 to 5% (wt/v) is treated with a salt of periodic acid at a final concentration of 0.5 to 4% (wt/v) at a pH between 4.5 and 6.5 and at a temperature between 0 and 10°C;

b) the chains of heparin thus obtained are treated with a strong base at a final molarity of the base of 0.1 to 0.3 N;

c) the depolymerization fragments thus obtained are treated with a reducing agent;

d) after optionally removing excess reducing agent, the reduced fragments are precipitated with the aid of an alcoholic solvent after the addition of a mineral salt;

e) an aqueous solution of the precipitate thus obtained and to which a mineral salt has been added is treated with alcohol;

f) the precipitated product thus formed is recovered and, if desired, the salt corresponding to the strong base used is converted into another pharmaceutically acceptable salt.

**7.** A process according to Claim 6, characterized in that it consists of a combination of the following steps:
- the controlled oxidation of heparin carried out by reacting heparin in aqueous solution at a final concentration of 0.5 to 5% (wt/v) with a salt of periodic acid at a final concentration of 0.5 to 4% (wt/v) at a pH between 4.5 and 6.5 and at a temperature between 0 and 10°C for about 15 to 48 hrs and protected from light,
- the depolymerization of the chains of heparin obtained, by addition of a strong base in an amount sufficient to give a final molarity of base of 0.1 to 0.3 N, at a pH between 11 and 12,
- the reduction of the depolymerization fragments with the aid of a reducing agent and, after removal of unreacted reducing agent, if necessary,
- the recovery of the reduced heparin fragments by precipitation by means of a solvent in which they are insoluble,
- the isolation of the desired fragments by fractionation, with the aid of alcohol in the presence of a mineral salt, of an aqueous solution obtained by redissolving in water the precipitate previously isolated, and recovering the precipitate formed.

**8.** A process according to Claim 6 or 7, characterized in that in the periodate oxidation step heparin and the salt of periodic acid are used in amounts leading to final concentrations of 1.5% to 5% and 1.5 to 2.5% (wt/v), respectively.

**9.** A process according to any one of Claims 6 to 8, characterized in that the periodate oxidation step is carried out at pH 5 at 4°C.

**10.** A process according to any one of Claims 6 to 9, characterized in that the salt of periodic acid is sodium metaperiodate.

**11.** A process according to anyone of Claims 6 to 10, characterized in that, in order to remove residual periodate, a dialysis is carried out with dialysis tubes having a porosity of 3 to 4,000 Da for about 15 hrs.

**12.** A process according to any one of Claims 6 to 11, characterized in that the recovery of the reduced fragments of heparin is carried out by adjusting the pH to 7 and then, after addition of a mineral salt such as NaCl, by adding 1 to 1.5 volumes of a solvent such as ethanol.

**13.** A process according to any one of Claims 6 to 12, characterized in that the reduced precipitated fragments of heparin are dissolved to give a 5% (wt/v) solution in water to which a mineral salt has been added to a final concentration of 1%, the pH of this solution having been adjusted to 3.5, and in that 0.85 volume of an alcoholic solvent is added.

**14.** A pharmaceutical composition, characterized in that it contains an effective amount of a composition according to any one of Claims 1 to 5, in admixture with a pharmaceutical carrier.

**15.** A pharmaceutical composition according to Claim 14, characterized in that it is in the form of a sterile, injectable, concentrated solution containing from 10 to 150 mg/ml when it is intended for subcutaneous injection and from 10 to 100 mg/ml when it is intended for intravenous injection or perfusion.

**16.** A biological reagent constituted by a composition according to any one of Claims 1 to 5.

**Claims for the following Contracting State : ES**

**1.** A process for the preparation of a composition of heparins of which 90% have a molecular weight between 3,600 and 11,000 Da, composed of fragments lacking repeating disaccharide sequences of the non-sulfated uronic acid glucosamine N-sulfate type, these fragments corresponding to the following general Formula I:

$R\text{-}(X\text{-}Y)_n\text{-}R'$ (I)

in which

- X represents either a sulfated iduronic acid residue of Formula II:

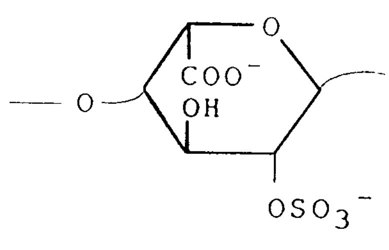

(II)

or, to the extent of about 1 residue per 2 chains at least, a non-sulfated uronic acid residue (D-glucuronic or L-iduronic), ring-opened between the carbon atoms at positions 2 and 3 of Formula III:

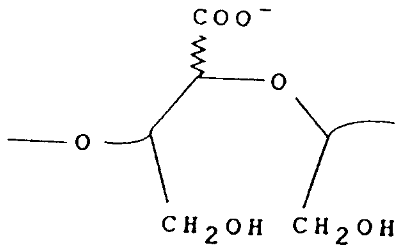

(III)

- Y represents a D-glucosamine residue of Formula IV:

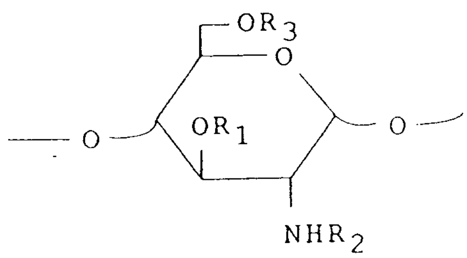

(IV)

$R_1$ being a hydrogen atom or a $-SO_3^-$ group
$R_2$ being a $-SO_3^-$ group or a $-CO-CH_3$ group, the proportion of the $-SO_3^-$ groups being at least 90%, and
$R_3$ being a $-SO_3^-$ group or a hydrogen atom, the proportion of the $-SO_3^-$ groups being at least 70%,

- R represents a hydrogen atom or a residue of formula V:

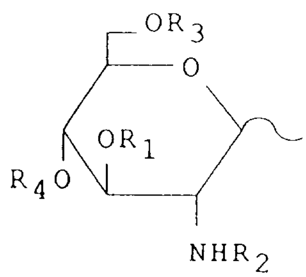

(V)

$R_1$ to $R_3$ being as defined above, and
$R_4$ representing a hydrogen atom or a uronic acid residue,

- R' represents either a hydrogen atom, or an unmodified uronic acid residue, or a uronic acid residue modified during the course of periodic oxidation and the aldehyde functions of which have been reduced to alcohols, with $7 \leqq n \leqq 15$ for the major species, which corresponds to chains of MW of 4,800 to 9,000 the molecular weights being determined by HPLC with a TSK 2000 SW column coupled to a 205 nm photometric detector and using 0.5M $Na_2SO_4$ as solvent with a flow rate of 1 ml/min,and its pharmaceutically acceptable salts, characterized in that:
a) an aqueous solution of heparin at a final concentration of 0.5 to 5% (wt/v) is treated with a salt of periodic acid at a final concentration of 0.5 to 4% (wt/v) at a pH between 4.5 and 6.5 and at a temperature between 0 and 10 °C;
b) the chains of heparin thus obtained are treated with a strong base at a final molarity of the base of 0.1 to 0.3 N;
c) the depolymerization fragments thus obtained are treated with a reducing agent;
d) after optionally removing excess reducing agent, the reduced fragments are precipitated with the aid of an alcoholic solvent after the addition of a mineral salt;
e) an aqueous solution of the precipitate thus obtained and to which a mineral salt has been added is treated with alcohol;

f) the precipitated product thus formed is recovered and, if desired, the salt corresponding to the strong base used is converted into another pharmaceutically acceptable salt.

**2.** A process according to Claim 1, characterized in that it consists of a combination of the following steps:
- the controlled oxidation of heparin carried out by reacting heparin in aqueous solution at a final concentration of 0.5 to 5% (wt/v) with a salt of periodic acid at a final concentration of 0.5 to 4% (wt/v) at a pH between 4.5 and 6.5 and at a temperature between 0 and 10 °C for about 15 to 48 hrs and protected from light,
- the depolymerization of the chains of heparin obtained, by addition of a strong base in an amount sufficient to give a final molarity of base of 0.1 to 0.3 N, at a pH between 11 and 12,
- the reduction of the depolymerization fragments with the aid of a reducing agent and, after removal of unreacted reducing agent, if necessary,
- the recovery of the reduced heparin fragments by precipitation by means of a solvent in which they are insoluble,
- the isolation of the desired fragments by fractionation with the aid of alcohol in the presence of a mineral salt, of an aqueous solution obtained by redissolving in water the precipitate previously isolated and recovering the precipitate formed.

**3.** A process according to Claim 1 or 2, characterized in that in the periodate oxidation step heparin and the salt of periodic acid are used in amounts leading to final concentrations of 1.5% to 5% and 1.5 to 2.5% (wt/v), respectively.

**4.** A process according to any one of Claims 1 to 3, characterized in that the periodate oxidation step is carried out at pH 5 at 4 °C.

**5.** A process according to any one of Claims 1 to 4, characterized in that the salt of periodic acid is sodium metaperiodate.

**6.** A process according to any one of Claims 1 to 5, characterized in that, in order to remove residual periodate, a dialysis is carried out with dialysis tubes having a porosity of 3 to 4,000 Da for about 15 hrs.

**7.** A process according to any one of Claims 1 to 6, characterized in that the recovery of the reduced fragments of heparin is carried out by adjusting the pH to 7 and then, after addition of a mineral salt such as NaCl, by adding 1 to 1.5 volumes of a solvent such as ethanol.

**8.** A process according to any one of Claims 1 to 7, characterized in that the reduced precipitated fragments of heparin are dissolved to give a 5% (wt/v) solution in water to which a mineral salt has been added to a final concentration of 1%, the pH of this solution having been adjusted to 3.5, and in that 0.85 volume of an alcoholic solvent is added.

**9.** A process for manufacturing a pharmaceutical composition, characterized in that an effective amount of a composition as defined in Claim 1 is admixed with a pharmaceutical carrier, into a pharmaceutically acceptable form.

## Patentansprüche
## Patentansprüche für folgende Vertragsstaaten : AT, BE, CH, DE, FR, GB, GR, IT, LI, LU, NL, SE

**1.** Zubereitung aus Heparinen, wovon 90 % ein Molekulargewicht zwischen 3600 und 11000 Da besitzen, **dadurch gekennzeichnet,** daß sie aus Fragmenten gebildet ist, die frei sind von Disaccharidketten des Typs nichtsulfatierte Uronsäure-Glucosamin-N-sulfat, welche Fragmente der folgenden allgemeinen Formel I entsprechen:

$R\text{-}(X\text{-}Y)_n\text{-}R'$ (I)

in der

- X entweder einen sulfatierten Iduronsäurerest der Formel II:

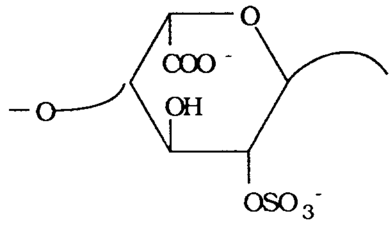

(II)

oder, in einem Verhältnis von mindestens einem Rest pro zwei Ketten, einen nichtsulfatierten Uronsäurerest (D-Glucuronsäure oder L-Iduronsäure), der zwischen den Kohlenstoffatomen in den Positionen 2 und 3 geöffnet ist, der Formel III:

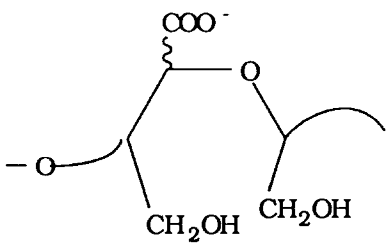

(III)

- Y einen D-Glucosaminrest der Formel IV:

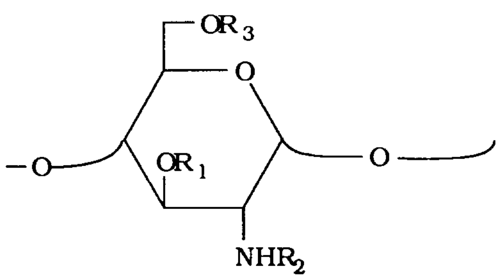

(IV)

worin

- $R_1$ ein Wasserstoffatom oder eine Gruppe $-SO_3^-$,
- $R_2$ eine Gruppe $-SO_3^-$ oder $-CO-CH_3$, wobei der Anteil der Gruppen $-SO_3^-$ mindestens 90 % beträgt, und
- $R_3$ eine Gruppe $-SO_3^-$ oder ein Wasserstoffatom, wobei der Anteil der Gruppen $-SO_3^-$ mindestens 70 % beträgt, darstellen,

- R ein Wasserstoffatom oder einen Rest der Formel V:

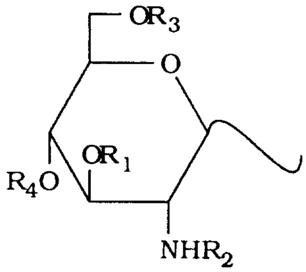

(V)

worin

- $R_1$ bis $R_3$ die oben angegebenen Bedeutungen besitzen und
- $R_4$ ein Wasserstoffatom oder den Uronsäurerest darstellt,

- R' entweder ein Wasserstoffatom oder einen natürlichen Uronsäurerest oder den Uronsäurerest, der im Verlaufe der Period-oxidation modifiziert worden ist und dessen Aldehydgruppen zu Alkoholgruppen reduziert worden sind, und

$7 \leqq n \leqq 15$ für die Mehrzahl der Bestandteile bedeuten, was Ketten mit einem Molekulargewicht von 4800 bis 9000 entspricht,

wobei die Molekulargewichte durch HPLC mit einer TSK 2000 SW-Säule, die mit einem photometrischen Detektor gekuppelt ist, der bei 205 nm arbeitet, unter Verwendung von 0,5 M $Na_2SO_4$ als Losungsmittel bei einem Durchsatz von 1 ml/min bestimmt worden sind,

und deren pharmazeutisch annehmbare Salze.

**2.** Zubereitung nach Anspruch 1, **dadurch gekennzeichnet**, daß sie im Mittel 3,3 Ladungen pro Disaccharideinheit aufweist.

**3.** Zubereitung nach einem der Ansprüche 1 oder 2, **dadurch gekennzeichnet**, daß sie:

- ein mittleres Molekulargewicht im Bereich von 5800 bis 7000 Da, wobei 70 % der Bestandteile zwischen 4800 und 9000 Dalton und 90 % zwischen 3600 und 11000 Da liegen,
- ein Molekulargewicht am Maximum des Peaks im Bereich von 5500 bis 6500 Da,
- weniger als 5 % Ketten kürzer als Dodecasaccharide und
- weniger als 5 % Ketten jenseits von 11000 besitzt.

**4.** Zubereitung nach einem der Ansprüche 1 bis 3, **dadurch gekennzeichnet**, daß das NMR-Spektrum dem in Figur 5 dargestellten entspricht.

**5.** Zubereitung nach einem der Ansprüche 1 bis 4, **dadurch gekennzeichnet**, daß die enthaltenen Fragmente in Form von Natrium-, Kalium-, Calcium- oder Magnesiumsalzen vorliegen.

**6.** Verfahren zur Herstellung von Zubereitungen aus Heparinen mit niedrigem Molekulargewicht, wie sie in Anspruch 1 definiert sind, **dadurch gekennzeichnet**, daß man:

a) eine wäßrige Lösung von Heparin mit einer Endkonzentration von 0,5 bis 5 % (Gew./Vol.) mit einem Salz der Periodsäure mit einer Endkonzentration von 0,5 bis 4 % (Gew./Vol.) bei einem pH-Wert von 4,5 bis 6,5 und einer Temperaturvon 0 bis 10 °C behandelt;

b) die in dieser Weise erhaltenen Heparinketten mit einer starken Base mit einer Endbasen-Molarität von 0,1 bis 0,3 N behandelt;

c) die in dieser Weise erhaltenen Depolymerisations-Fragmente mit einem Reduktionsmittel behandelt;

d) nach der eventuellen Entfernung des überschüssigen Reduktionsmittels die reduzierten Fragmente nach der Zugabe eines anorganischen Salzes mit Hilfe eines alkoholischen Lösungsmittels ausfällt;

e) eine wäßrige Lösung des in dieser Weise erhaltenen Niederschlags nach Zugabe eines anorganischen Salzes mit Alkohol behandelt;

f) das in dieser Weise ausgefällte Produkt gewinnt und gegebenenfalls das der verwendeten starken Base entsprechende Salz in ein anderes pharmazeutisch annehmbares Salz umwandelt.

**7.** Verfahren nach Anspruch 6, **dadurch gekennzeichnet**, daß es die Kombination der folgenden Stufen umfaßt:

- milde Oxidation von Heparin durch Umsetzen von Heparin in wäßriger Lösung bei einer Endkonzentration von 0,5 bis 5% (Gew./Vol.) mit einem Salz der Periodsäure bei einer Endkonzentration von 0,5 bis 4 % (Gew./Vol.) bei einem pH-Wert zwischen 4,5 und 6,5 bei einer Temperatur von 0 bis 10 °C während etwa 15 bis 48 Stunden unter Lichtausschluß,
- Depolymerisation der erhaltenen Heparinketten durch Zugabe einer starken Base in einer Menge, die zu einer Endmolarität der Base von 0,1 bis 0,3 N und zu einem pH zwischen 11 und 12 führt,
- Reduktion der Depolymerisations-Fragmente mit Hilfe eines Reduktionsmittels und anschließend gegebenenfalls die Entfernung des nichtumgesetzten Reduktionsmittels,
- Gewinnung der reduzierten Heparinfragmente durch Ausfällen mit Hilfe eines Lösungsmittelmediums, in dem sie unlöslich sind,

- Isolierung der gewünschten Fragmente aus einer durch Inlösungbringen des in der oben beschriebenen Weise isolierten Niederschlags in Wasser erhaltenen wäßrigen Lösung durch Fraktionierung mit Hilfe von Alkohol in Gegenwart eines anorganischen Salzes und Gewinnen des gebildeten Niederschlags.

**8.** Verfahren nach Anspruch 6 oder 7, **dadurch gekennzeichnet**, daß man in der Stufe der Periodoxidation Heparin und das Salz der Periodsäure in Mengen verwendet, die zu Endkonzentrationen von 1,5 % bis 5 % bzw. 1,5 % bis 2,5 % (Gew./Vol.) führen.

**9.** Verfahren nach einem der Ansprüche 6 bis 8, **dadurch gekennzeichnet**, daß man die Stufe der Period-oxidation bei einem pH-Wert von 5 und bei 4 ° C durchführt.

**10.** Verfahren nach einem der Ansprüche 6 bis 9, **dadurch gekennzeichnet**, daß das Salz der Periodsäure Natriummetaperiodat ist.

**11.** Verfahren nach einem der Ansprüche 6 bis 10, **dadurch gekennzeichnet**, daß man zur Beseitigung des restlichen Periodats eine Dialyse mit Dialyseschläuchen mit einer Porosität von 3 bis 4000 Da während etwa 15 h durchführt.

**12.** Verfahren nach einem der Ansprüche 6 bis 11, **dadurch gekennzeichnet**, daß die Gewinnung der reduzierten Heparinfragmente dadurch bewirkt wird, daß man den pH auf 7 einstellt und nach der Zugabe eines anorganischen Salzes, wie NaCl, 1 bis 5 Volumen eines Lösungsmittels, wie Ethanol, zusetzt.

**13.** Verfahren nach einem der Ansprüche 6 bis 12, **dadurch gekennzeichnet**, daß man die ausgefällten reduzierten Heparinfragmente in einer Konzentration von 5 % (Gew./Vol.) in mit einem anorganischen Salz versetzten Wasser löst bis zu einer Endkonzentration von 1 %, wobei der pH dieser Lösung auf 3,5 eingestellt wird und man 0,85 Volumen eines alkoholischen Lösungsmittels zugibt.

**14.** Pharmazeutische Zubereitung, **dadurch gekennzeichnet**, daß sie eine wirksame Menge einer Zubereitung nach einem der Ansprüche 1 bis 5 in Kombination mit einem pharmazeutischen Trägermaterial umfaßt.

**15.** Pharmazeutische Zubereitung nach Anspruch 14, **dadurch gekennzeichnet**, daß sie in Form einer konzentrierten, injizierbaren sterilen Lösung vorliegt, die, wenn sie für die subkutane Injektion bestimmt ist, 10 bis 150 mg/ml oder, wenn sie für die intravenöse Injektion oder für die Perfusion bestimmt ist, 10 bis 100 mg/ml enthält.

**16.** Biologisches Reagens, gebildet durch eine Zubereitung nach einem der Ansprüche 1 bis 5.

**Patentanprüche für folgenden Vertragsstaat : ES**

**1.** Verfahren zur Herstellung einer Zubereitung aus Heparinen, wovon 90 % ein Molekulargewicht zwischen 3600 und 11000 Da besitzen**, dadurch gekennzeichnet**, daß sie aus Fragmenten gebildet ist, die frei sind von Disaccharidketten des Typs nichtsulfatierte Uronsäure-Glucosamin-N-sulfat, welche Fragmente der folgenden allgemeinen Formel I entsprechen:

$R\text{-}(X\text{-}Y)_n\text{-}R'$ (I)

in der

- X entweder einen sulfatierten Iduronsäurerest der Formel II:

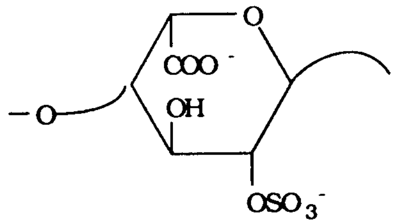

(II)

oder, in einem Verhältnis von mindestens einem Rest pro zwei Ketten, einen nichtsulfatierten Uronsäurerest (D-Glucuronsäure oder L-Iduronsäure), der zwischen den Kohlenstoffatomen in den Positionen 2 und 3 geöffnet ist, der Formel III:

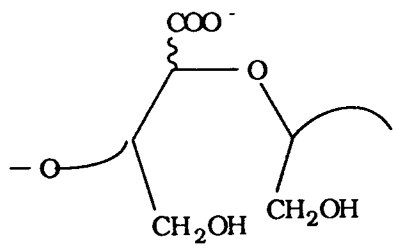

(III)

- Y einen D-Glucosaminrest der Formel IV:

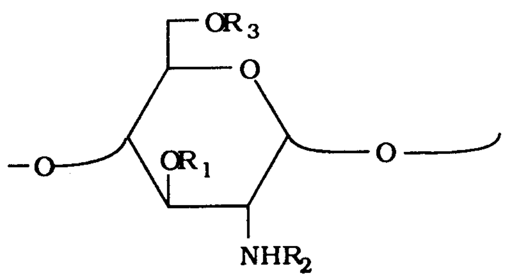

(IV)

worin
- $R_1$ ein Wasserstoffatom oder eine Gruppe $-SO_3^-$,
- $R_2$ eine Gruppe $-SO_3^-$ oder $-CO-CH_3$, wobei der Anteil der Gruppen $-SO_3^-$ mindestens 90 % beträgt, und
- $R_3$ eine Gruppe $-SO_3^-$ oder ein Wasserstoffatom, wobei der Anteil der Gruppen $-SO_3^-$ mindestens 70 % beträgt, darstellen,

- R ein Wasserstoffatom oder einen Rest der Formel V:

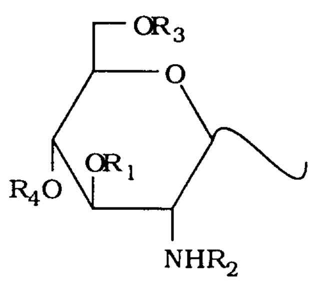

(V)

worin

- $R_1$ bis $R_3$ die oben angegebenen Bedeutungen besitzen und
- $R_4$ ein Wasserstoffatom oder den Uronsäurerest darstellt,

- R' entweder ein Wasserstoffatom oder einen natürlichen Uronsäurerest oder den Uronsäurerest, der im Verlaufe der Period-oxidation modifiziert worden ist und dessen Aldehydgruppen zu Alkoholgruppen reduziert worden sind, und

$7 \leqq n \leqq 15$ für die Mehrzahl der Bestandteile bedeuten, was Ketten mit einem Molekulargewicht von 4800 bis 9000 entspricht,

wobei die Molekulargewichte durch HPLC mit einer TSK 2000 SW-Säule, die mit einem photometrischen Detektor gekuppelt ist, der bei 205 nm arbeitet, unter Verwendung von 0,5 M $Na_2SO_4$ als Lösungsmittel bei einem Durchsatz von 1 ml/min bestimmt worden sind,

und von deren pharmazeutisch annehmbaren Salzen,

**dadurch gekennzeichnet,** daß man:

a) eine wäßrige Lösung von Heparin mit einer Endkonzentration von 0,5 bis 5 % (Gew./Vol.) mit einem Salz der Periodsäure mit einer Endkonzentration von 0,5 bis 4 % (Gew./Vol.) bei einem pH-Wert von 4,5 bis 6,5 und einer Temperatur von 0 bis 10 ° C behandelt;

b) die in dieser Weise erhaltenen Heparinketten mit einer starken Base mit einer Endbasen-Molarität von 0,1 bis 0,3 N behandelt;

c) die in dieser Weise erhaltenen Depolymerisations-Fragmente mit einem Reduktionsmittel behandelt;

d) nach der eventuellen Entfernung des überschüssigen Reduktionsmittels die reduzierten Fragmente nach der Zugabe eines anorganischen Salzes mit Hilfe eines alkoholischen Lösungsmittels ausfällt;

e) eine wäßrige Lösung des in dieser Weise erhaltenen Niederschlags nach Zugabe eines anorganischen Salzes mit Alkohol behandelt;

f) das in dieser Weise ausgefällte Produkt gewinnt und gegebenenfalls das der verwendeten starken Base entsprechende Salz in ein anderes pharmazeutisch annehmbares Salz umwandelt.

**2.** Verfahren nach Anspruch 1, **dadurch gekennzeichnet**, daß es die Kombination der folgenden Stufen umfaßt:

- milde Oxidation von Heparin durch Umsetzen von Heparin in wäßriger Lösung bei einer Endkonzentration von 0,5 bis 5 % (Gew./Vol.) mit einem Salz der Periodsäure bei einer Endkonzentration von 0,5 bis 4 % (Gew./Vol.) bei einem pH-Wert zwischen 4,5 und 6,5 bei einer Temperatur von 0 bis 10 ° C während etwa 15 bis 48 Stunden unter Lichtausschluß,
- Depolymerisation der erhaltenen Heparinketten durch Zugabe einer starken Base in einer Menge, die zu einer Endmolarität der Base von 0,1 bis 0,3 N und zu einem pH zwischen 11 und 12 führt,
- Reduktion der Depolymerisations-Fragmente mit Hilfe eines Reduktionsmittels und anschließend gegebenenfalls die Entfernung des nichtumgesetzten Reduktionsmittels,
- Gewinnung der reduzierten Heparinfragmente durch Ausfällen mit Hilfe eines Lösungsmittelmediums, in dem sie unlöslich sind,
- Isolierung der gewünschten Fragmente aus einer durch Inlösungbringen des in der oben beschriebenen Weise isolierten Niederschlags in Wasser erhaltenen wäßrigen Lösung durch Fraktionierung mit Hilfe von Alkohol in Gegenwart eines anorganischen Salzes und Gewinnen des gebildeten Niederschlags.

**3.** Verfahren nach Anspruch 1 oder 2, **dadurch gekennzeichnet**, daß man in der Stufe der Period-oxidation Heparin und das Salz der Periodsäure in Mengen verwendet, die zu Endkonzentrationen von 1,5 % bis 5 % bzw. 1,5 % bis 2,5 % (Gew./Vol.) führen.

**4.** Verfahren nach einem der Ansprüche 1 bis 3, **dadurch gekennzeichnet**, daß man die Stufe der Period-oxidation bei einem pH-Wert von 5 und bei 4 ° C durchführt.

**5.** Verfahren nach einem der Ansprüche 1 bis 4, **dadurch gekennzeichnet**, daß das Salz der Periodsäure Natriummetaperiodat ist.

**6.** Verfahren nach einem der Ansprüche 1 bis 5, **dadurch gekennzeichnet**, daß man zur Beseitigung des restlichen Periodats eine Dialyse mit Dialyseschläuchen mit einer Porosität von 3 bis 4000 Da während etwa 15 h durchführt.

7. Verfahren nach einem der Ansprüche 1 bis 6, **dadurch gekennzeichnet**, daß die Gewinnung der reduzierten Heparinfragmente dadurch bewirkt wird, daß man den pH auf 7 einstellt und nach der Zugabe eines anorganischen Salzes, wie NaCl, 1 bis 5 Volumen eines Lösungsmittels, wie Ethanol, zusetzt.

8. Verfahren nach einem der Ansprüche 1 bis 7, **dadurch gekennzeichnet**, daß man die ausgefällten reduzierten Heparinfragmente in einer Konzentration von 5 % (Gew./Vol.) in mit einem anorganischen Salz versetzten Wasser löst bis zu einer Endkonzentration von 1 %, wobei der pH dieser Lösung auf 3,5 eingestellt wird und man 0,85 Volumen eines alkoholischen Lösungsmittels zugibt.

9. Verfahren zur Herstellung einer pharmazeutischen Zubereitung, **dadurch gekennzeichnet**, daß man eine Zubereitung, wie sie in Anspruch 1 definiert ist, in Kombination mit einem pharmazeutischen Trägermaterial in eine pharmazeutisch annehmbare Form bringt.

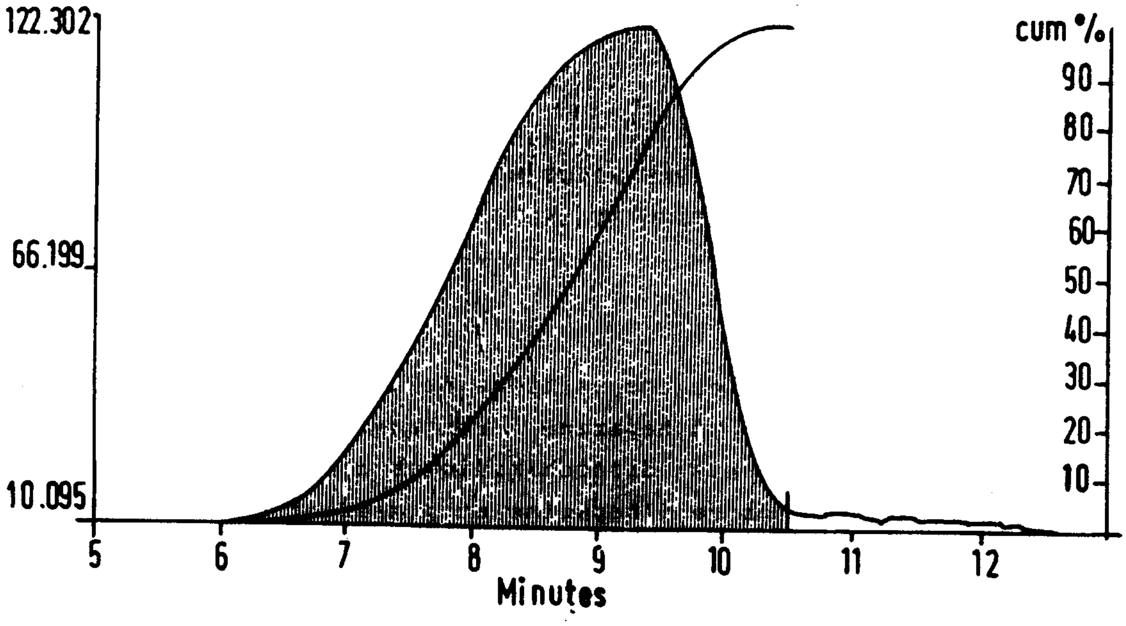
122.302
66.199
10.095
cum %
90
80
70
60
50
40
30
20
10
5
6
7
8
9
10
11
12
Minutes

FIG.1

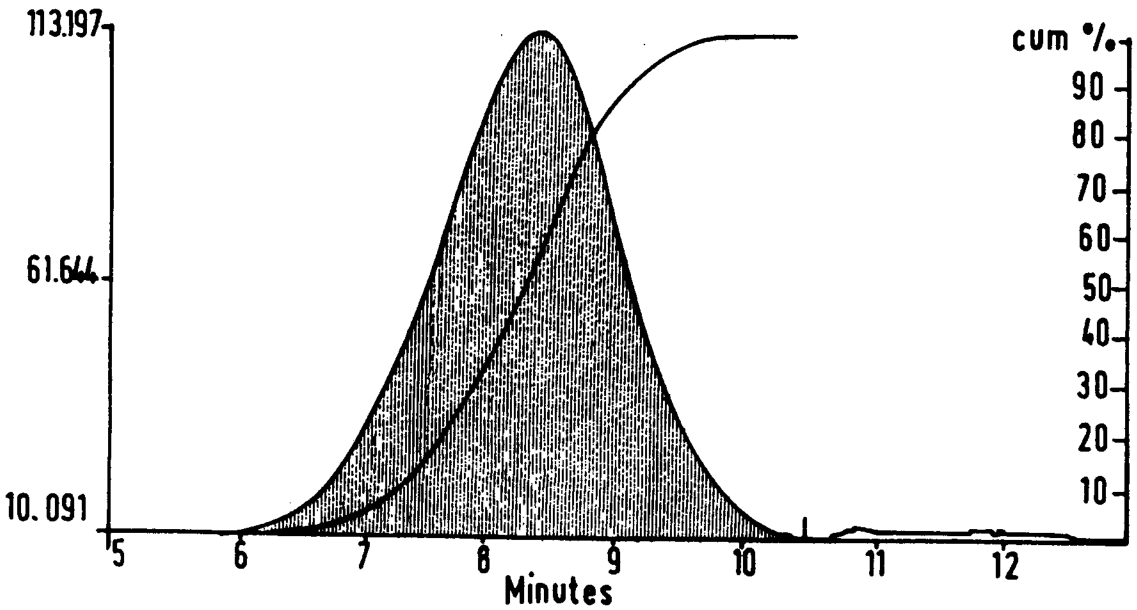
113.197
61.644
10.091
cum %
90
80
70
60
50
40
30
20
10
5
6
7
8
9
10
11
12
Minutes

FIG.2

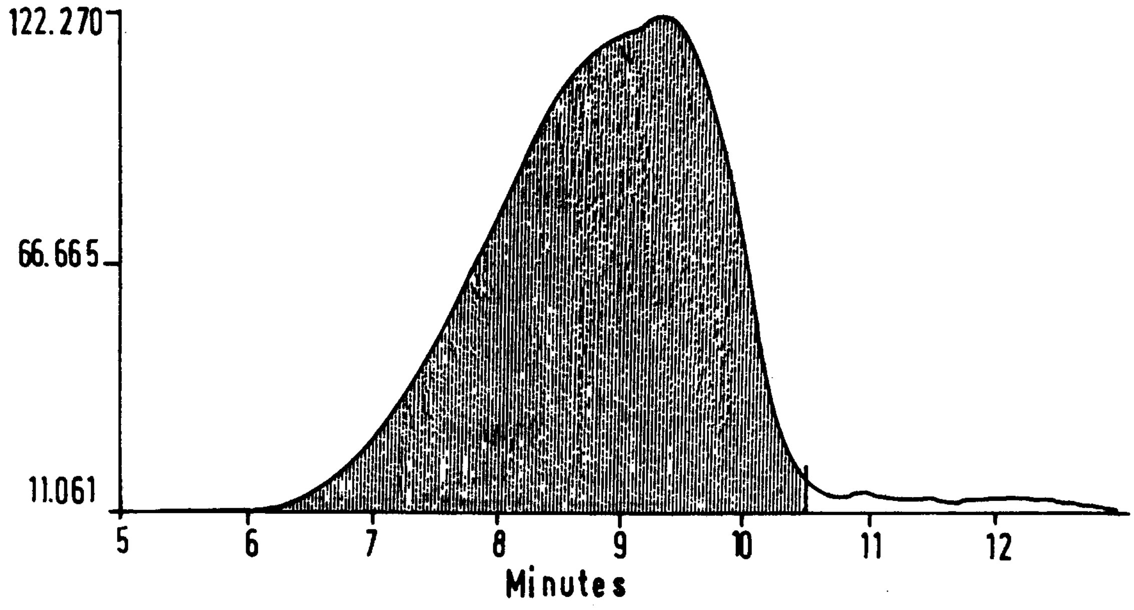
122.270
66.665
11.061
5
6
7
8
9
10
11
12
Minutes

FIG.3

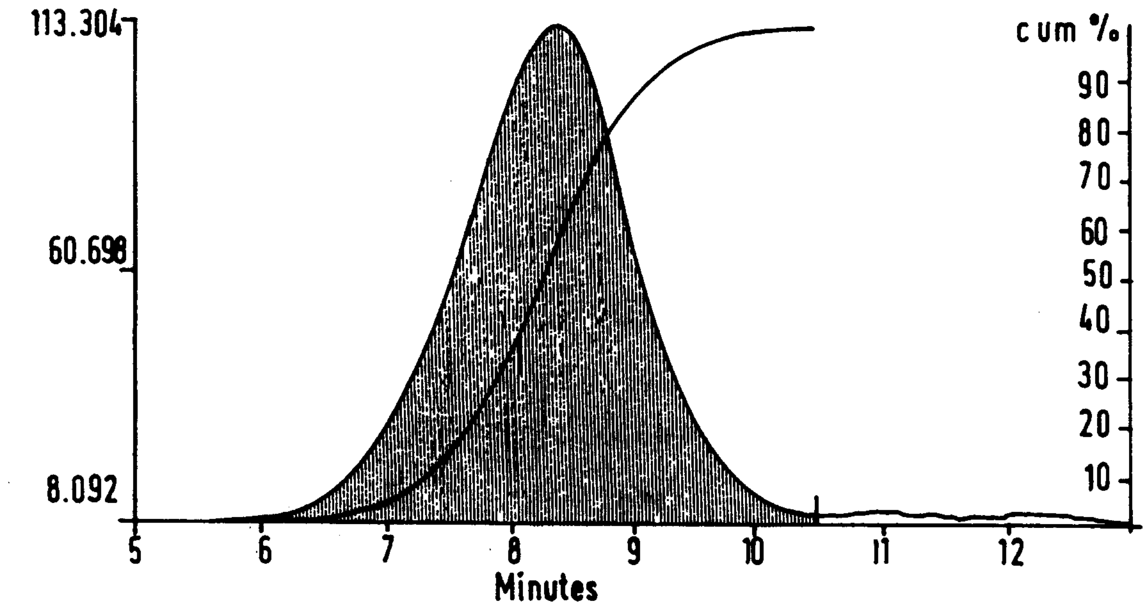
113.304
60.698
8.092
cum %
90
80
70
60
50
40
30
20
10
5
6
7
8
9
10
11
12
Minutes

FIG.4

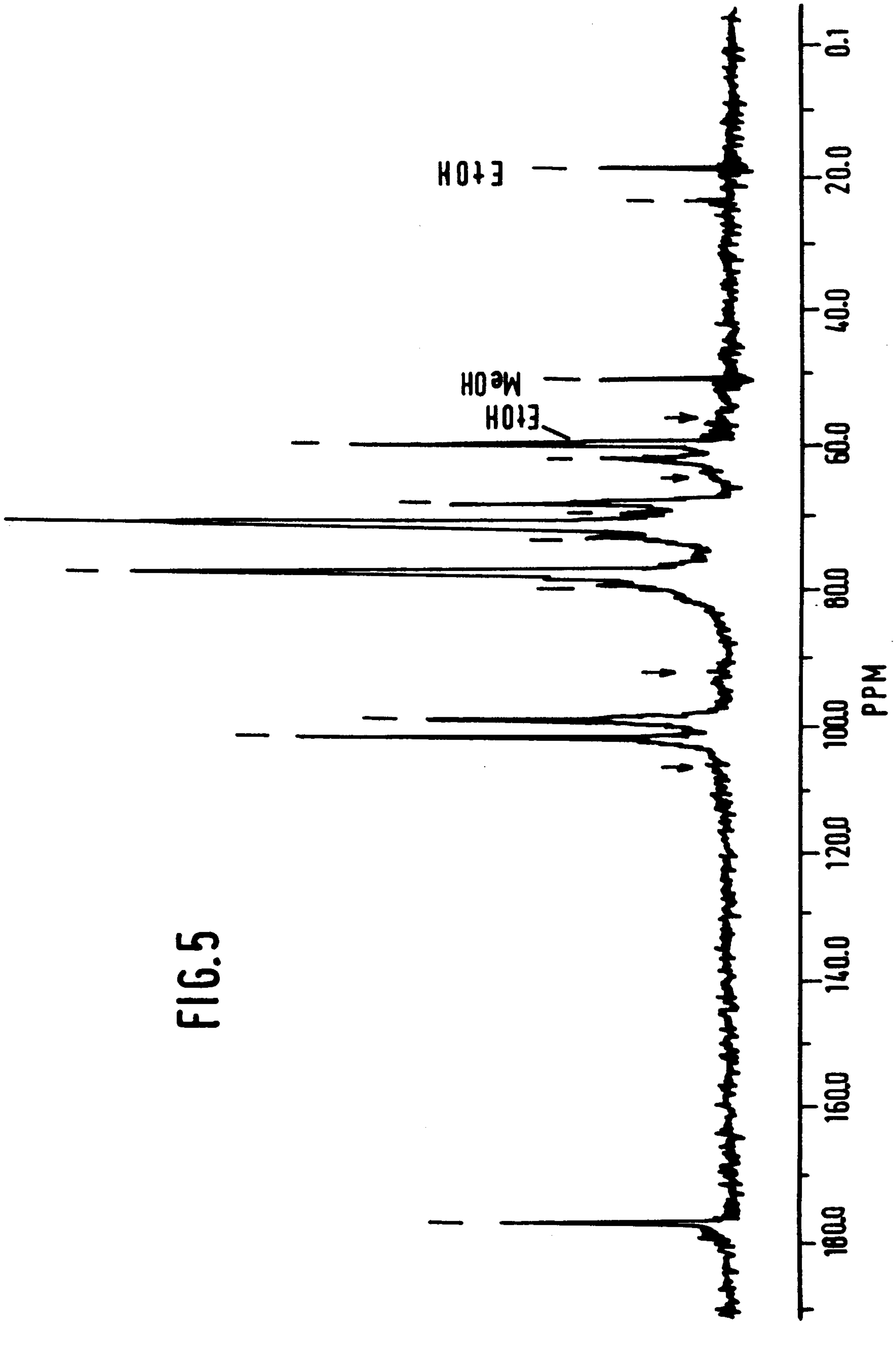


FIG.5